(19) Europäisches Patentamt
European Patent Office
Office européen des brevets

(11) **EP 1 839 070 B2**

(12) **NOUVEAU FASCICULE DE BREVET EUROPEEN**
Après la procédure d'opposition

(45) Date de publication et mention de la décision concernant l'opposition:
**30.04.2014 Bulletin 2014/18**

(45) Mention de la délivrance du brevet:
**20.08.2008 Bulletin 2008/34**

(21) Numéro de dépôt: **06700317.8**

(22) Date de dépôt: **03.01.2006**

(51) Int Cl.:
**G01S 19/43** *(2010.01)*     **G01S 19/47** *(2010.01)*

(86) Numéro de dépôt international:
**PCT/EP2006/050014**

(87) Numéro de publication internationale:
**WO 2006/077174 (27.07.2006 Gazette 2006/30)**

(54) **RECEPTEUR DE POSITIONNEMENT PAR SATELLITE A INTEGRITE ET CONTINUITE AMELIOREES**

SATELLITENORTUNGSEMPFÄNGER MIT VERBESSERTER INTEGRITÄT UND KONTINUITÄT

IMPROVED INTEGRITY AND CONTINUITY SATELLITE POSITIONING RECEIVER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.01.2005 FR 0500592**

(43) Date de publication de la demande:
**03.10.2007 Bulletin 2007/40**

(73) Titulaire: **THALES**
**92200 Neuilly sur Seine (FR)**

(72) Inventeur: **MARTIN, Nicolas**
**26500 Bourg-les-Valence (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
FR-A- 2 769 442     US-A1- 2004 135 721
US-A1- 2004 138 813

• MARK L. PSIAKI, HEE JUNG: "Extended Kalman Filter Methods for Tracking Weak GPS Signals" ION GPS 2002, 27 septembre 2002 (2002-09-27), pages 2539-2553, XP002340141 Portland, OR
• NESREEN I. ZIEDAN, JAMES L. GARRISON: "Extended Kalman Filter-Based Tracking of Weak GPS Signals under High Dynamic Conditions" ION GNSS 17TH INTERNATIONAL MEETING OF THE SATELLITE DIVISION, 24 septembre 2004 (2004-09-24), pages 20-31, XP002340142 Long Beach, CA
• FORD, THOMAS J., HAMILTON, JASON: 'A New Positioning Filter: Phase Smoothing in the Position Domain' NAVIGATION: JOURNAL OF THE INSTITUTE OF NAVIGATION vol. 50, no. 2, 2003 - 2003, pages 65 - 78

EP 1 839 070 B2

**Description**

L'invention concerne un récepteur de signaux d'un système de radionavigation par satellite destiné à calculer très précisément la position d'un porteur. Le système le plus connu, auquel on se référera dans la suite est le système GPS et on désignera les systèmes de radionavigation par satellite sous l'appellation générique GPS même si ce sont des systèmes voisins tels que Galileo ou Glonass.

Le système GPS utilise une constellation de satellites qui tournent autour de la terre sur des orbites très précisément déterminées, c'est à dire qu'on peut connaître à tout instant la position d'un satellite quelconque. Les orbites des satellites sont choisies de façon à ce qu'à toute heure, 6 à 12 satellites soient visibles en tout point de la terre. Chaque satellite émet deux signaux radioélectriques de fréquences $L_1$ (1575,42 MHz) et $L_2$ (1227,6 MHz). Au sol ou sur un véhicule terrien, maritime ou aérien, un récepteur GPS reçoit les signaux émis par des satellites visibles.

Le récepteur GPS embarqué mesure la durée de propagation requise pour qu'une marque horaire transmise par un satellite lui parvienne. Les marques horaires sont codées sur des ondes porteuses par la technique de modulation de phase. Chaque satellite transmet ainsi un code pseudo-aléatoire qui lui est propre. Une réplique de la séquence du code est générée par le récepteur et le décalage que doit subir la réplique afin de coïncider avec le code reçu correspond à la durée de propagation du signal pour parcourir la distance satellite-récepteur. Cette durée multipliée par la vitesse de la lumière dans le milieu traversé donne une mesure de distance appelée pseudo-distance. A partir des mesures des pseudo-distances le séparant de chaque satellite visible, et de la connaissance de la position des satellites, le récepteur déduit sa position précise en latitude, longitude, et en altitude dans un repère terrestre par une résolution numérique voisine de la triangulation. Il peut également en déduire la date et l'heure précise dans le repère temporel du système GPS.

La référence de temps du récepteur, fournie par son horloge, ne coïncide pas parfaitement avec la référence de temps des satellites de la constellation ; cela induit un biais dans les mesures de temps de propagation, donc de distance, égal au retard de la référence de temps du récepteur par rapport à la référence de temps des satellites. On emploie pour cela le terme de « pseudo-distance ». Le biais de temps, commun à toutes les mesures, constitue une quatrième inconnue, outre les trois inconnues de position, ce qui oblige à disposer d'au moins quatre mesures pour calculer la position.

En outre, la position du récepteur est estimée en faisant un certain nombre d'approximations. La mesure de la pseudo-distance ne peut pas par exemple s'affranchir des erreurs liées au système telles que le manque de précision des éphémérides ou des horloges embarquées dans les satellites. La mesure de la pseudo-distance est également entachée d'erreurs liées aux interactions entre les signaux et les couches d'atmosphère qu'ils traversent. Le retard de propagation du signal dans la troposphère et l'ionosphère est fonction de l'inclinaison du trajet et de l'heure à laquelle il a lieu. Typiquement les erreurs de positionnement du GPS liées à l'atmosphère sont plus marquées de jour que de nuit et plus sensibles lorsqu'un satellite est proche de l'horizon qu'au zénith. Dans certaines applications comme par exemple l'approche de précision en aéronautique, la précision de positionnement obtenue par une mesure directe (ou absolue) de la pseudo-distance n'est pas suffisante.

L'utilisation d'une mesure différentielle permet d'améliorer sensiblement la précision du positionnement. Elle consiste à transmettre par un canal dédié (VHF, UHF ou téléphonie cellulaire) des corrections des mesures de pseudo-distance élaborées à partir de mesures de pseudo-distance provenant de récepteurs disposés dans des stations au sol et dont les positions sont connues très précisément et proches du récepteur embarqué. La mesure de la pseudo-distance séparant un récepteur sol et un satellite est comparée à la distance théorique séparant ces deux dispositifs. La distance théorique est calculée à partir des coordonnées spatiales respectives du récepteur sol et du satellite qui sont connues à tout instant. La différence entre la mesure de distance et la distance théorique représente l'erreur de mesure, elle est calculée pour chaque satellite à chaque époque d'observation. Ces différences de distance constituent des termes correctifs (aussi appelés corrections différentielles) qui sont retranchés aux mesures de pseudo-distance réalisées par le récepteur mobile. Ces corrections ont pour effet de supprimer pratiquement totalement les erreurs qui présentent une corrélation spatiale importante quelle que soit leur origine, « système » ou « atmosphérique ». Les corrections sont d'autant plus efficaces que les deux récepteurs sont proches. Toutefois, la mesure différentielle n'élimine pas les erreurs liées aux réflexions du signal sur des objets proches de l'antenne du récepteur, ni les erreurs propres au récepteur (bruit thermique). Ces erreurs sont présentes sur le récepteur de référence ainsi que sur le récepteur embarqué, elles dégradent la mesure de positionnement lors de la correction différentielle ; la précision obtenue est de l'ordre de quelques mètres.

Pour améliorer la précision du positionnement, les récepteurs sols et ceux mobiles, embarqués sur porteur, peuvent aussi tirer profit d'une seconde information élaborée par le récepteur qui est la mesure de la phase de la porteuse, pour chaque signal satellite reçu. La mesure de la phase instantanée de la porteuse reçue permet en effet de calculer une pseudo-distance, dite pseudo-distance de porteuse, entre le récepteur et le satellite, au même titre que la mesure de la phase instantanée du code pseudo-aléatoire. Cette pseudo-distance de porteuse subit les mêmes variations que la pseudo-distance de code, lorsque la distance entre le récepteur et le satellite ou le biais de temps dû à l'horloge du récepteur varient. Cette pseudo-distance mesurée par la phase est a priori ambiguë puisque la phase est connue modulo 2π mais elle est beaucoup moins bruitée que les mesures de pseudo-distance de code.

Une solution connue pour améliorer les mesures de pseudo-distance consiste à lisser la mesure de pseudo-distance bruitée réalisée sur le code par les mesures de phase peu bruitées. Pour cela le récepteur applique un filtre passe bas à la différence entre les mesures de pseudo-distance de code et de pseudo-distance de porteuse, puis ajoute cette différence filtrée à la mesure de pseudo-distance de porteuse pour reconstituer la mesure de phase de code. Ce traitement est réalisé axe satellite par axe satellite. Si la mesure est différentielle, un lissage identique est appliqué sur les récepteurs de la station sol afin que l'erreur de traînage du filtre passe bas, due à la divergence entre le code et la porteuse liée aux fluctuations du retard ionosphérique, soit identique au sol et sur le récepteur mobile, et ne perturbe pas la mesure de positionnement après de l'application de la correction. Une telle technique est divulguée dans le document FR-A-2 769 442

Cette solution représente l'état de l'art de l'architecture des systèmes de navigation par satellites. Son principal intérêt tient dans sa simplicité et dans l'absence d'effet de couplage entre les mesures des pseudo-distances des différents satellites (canaux), néanmoins elle n'est pas complètement satisfaisante. En effet, le gain sur la précision de la mesure est significatif uniquement lorsque le lissage est effectué avec une constante de temps longue ; et dans ce cas, la durée de réinitialisation pour récupérer la précision après une modification brusque de l'ensemble des mesures disponibles (par exemple disparition d'un satellite par masquage, panne d'un satellite ou encore panne d'un récepteur au sol dans le cas du GPS différentiel) est également longue. Il serait souhaitable d'éviter cet inconvénient.

Par ailleurs, pour quantifier l'intégrité de la mesure de position dans des applications où l'intégrité est critique, telles que les applications aéronautiques, on utilise un paramètre appelé « rayon de protection » de la mesure de position. Le rayon de protection correspond à une erreur de position maximale pour une probabilité donnée d'apparition d'erreur. C'est-à-dire que la probabilité que l'erreur de position dépasse le rayon de protection annoncé est inférieure à cette valeur de probabilité donnée. Le calcul se fonde sur deux types d'erreur qui sont d'une part les erreurs normales de mesure et d'autre part les erreurs causées par une anomalie de fonctionnement de la constellation de satellites, par une panne d'un satellite ou encore une panne d'un récepteur sol.

Communément, on distingue deux types d'événement redoutés pouvant survenir à un système de positionnement GPS : le premier, nommé non-continuité, correspond à une dégradation non prévue du service, mais déclarée ; le second, appelé non-intégrité, correspond à une mesure de position erronée mais non déclarée, dont l'apparence est celle d'une mesure fiable. Une non-continuité peut correspondre par exemple à l'apparition d'une alarme indiquant la présence supposée d'un panne. Dans les deux cas les conséquences peuvent être graves, d'où la nécessité de minimiser la probabilité de tels événements. Un calcul de rayon de protection peut être estimé pour une valeur de probabilité de non-continuité et une valeur de probabilité de non intégrité données a priori. Dans ce cas la probabilité que l'erreur de positionnement dépasse le rayon sera inférieure à la probabilité de non-intégrité donnée, et la probabilité d'alarme (justifiée ou non) sera inférieure à la probabilité de non-continuité donnée.

Par exemple, dans le cas des systèmes existants qui sont fondés sur le lissage, axe par axe, des mesures de position du code pseudo-aléatoire par les variations de phase de la porteuse, le rayon de protection se dégrade brutalement lors de la disparition d'un satellite et met longtemps à retrouver une valeur acceptable après réapparition du satellite, à cause du temps de réponse du filtre de lissage. Il serait souhaitable de trouver une solution qui évite cet inconvénient. L'invention a en particulier pour objet la minimisation de cette détérioration.

La présente invention pallie les inconvénients des solutions présentées ci-dessus. Elle a pour but d'améliorer la précision de la mesure de position en utilisant d'une manière nouvelle les deux mesures simultanées de pseudo-distance mises à disposition par chaque satellite tout en conférant à la position ainsi obtenue une meilleure robustesse vis-à-vis des dégradations brutales de la géométrie des satellites (régime transitoire) qu'il est susceptible de rencontrer, et ceci pour le positionnement absolu comme pour le positionnement en différentiel.

A cet effet, l'invention a pour objet un récepteur de positionnement par satellite, comprenant plusieurs canaux de traitement numérique de signal destinés à être associés chacun à un satellite respectif et fournissant chacun une première donnée numérique, appelée pseudo-distance de code, représentant une pseudo-distance entre le récepteur et le satellite calculée à partir d'une mesure de phase instantanée d'un code pseudo-aléatoire présent dans le signal émis par le satellite et une deuxième donnée numérique, appelée pseudo-distance de porteuse, représentant cette pseudo-distance calculée à partir d'une mesure de phase instantanée de la porteuse du signal émis par le satellite, caractérisé en ce qu'il comporte un filtre de Kalman étendu comportant

- des moyens de calcul de propagation d'une position estimée du récepteur dans un repère terrestre, pour établir, à partir d'une position estimée précédemment calculée, une position estimée propagée ;
- des moyens de calcul de propagation d'un vecteur d'état estimé comprenant notamment l'erreur sur la position estimée du récepteur, à partir d'une équation de propagation matricielle faisant intervenir une matrice de propagation,
- des moyens de calcul de recalage du vecteur d'état estimé à partir d'observations relatives à chaque satellite et d'une matrice d'observations liant le vecteur d'état et les observations,
- des moyens de calcul d'observations, recevant d'une part les pseudo-distances de code et de porteuse et d'autre part une pseudo-distance estimée calculée entre le récepteur et chaque satellite, pour établir des observations à appliquer à l'entrée des moyens de calcul de recalage,

- des moyens pour calculer une pseudo-distance estimée calculée pour chaque satellite, par calcul de la distance entre la position estimée propagée du récepteur dans le repère terrestre et chaque satellite.

Le filtre de Kalman comprendra en général aussi :

- des moyens de calcul de propagation de la matrice de covariance du vecteur d'état estimé ;
- des moyens de calcul de recalage de la matrice de covariance du vecteur d'état estimé ;
- des moyens pour calculer le gain de recalage à partir de la matrice de covariance propagée et de la matrice d'observation ;
- des moyens pour appliquer une correction à la mesure de position estimée propagée, à partir de correction d'erreur ;
- des moyens pour appliquer cette correction d'erreur au vecteur d'état estimé ;
- des moyens pour calculer cette correction d'erreur à partir des valeurs du vecteur d'état estimé mémorisé.

L'invention propose donc d'utiliser, plutôt qu'un lissage du code par la phase de porteuse réalisé axe par axe, un filtrage de Kalman spécifique dans lequel les données d'entrée sont :

- une mesure de pseudo-distance de code non lissée, plutôt qu'une mesure de pseudo-distance de code lissée par la phase ;
- une mesure de pseudo-distance de porteuse, et non pas une mesure d'incréments de phase entre deux observations successives. Grâce à cela, on constate qu'on peut obtenir un rayon de protection qui se détériore lentement lorsqu'on perd un satellite mais qui s'améliore instantanément lorsqu'on acquiert un nouveau satellite. En l'absence de rupture de géométrie de la constellation de satellites, le rayon de protection s'améliore progressivement au cours des mesures successives de position.

Avantageusement, le modèle d'état fait intervenir dans le vecteur d'état, pour chaque satellite, une composante représentant l'ambiguïté de la phase de porteuse. C'est en effet cette ambiguïté qui constitue l'erreur principale sur la mesure de pseudo-distance par la phase de porteuse et il est souhaitable de réduire cette erreur.

Par ailleurs, pour aider à la détermination d'un rayon de protection en présence d'une panne de satellite (c'est-à-dire qu'un satellite émet sans qu'on le sache un signal erroné mais qui présente les apparences d'un signal valide), on prévoit la disposition suivante : le filtre de Kalman constitue un filtre principal fournissant une position calculée dans le repère terrestre à partir d'observations faites sur m satellites identifiés par leur rang i (i entier de 1 à m), et le récepteur comporte par ailleurs m filtres de Kalman auxiliaires de rang i, un filtre auxiliaire de rang i recevant les signaux de tous les satellites à l'exception de ceux provenant du satellite de rang i.

Le récepteur comporte alors des moyens de calcul d'un rayon de protection à partir des sorties des différents filtres de Kalman et des moyens de vérification que ce rayon de protection n'excède pas un seuil déterminé.

Dans le cas d'un récepteur embarqué fonctionnant en mode différentiel à l'aide de corrections différentielles envoyées par une station au sol qui comporte M récepteurs, le récepteur embarqué comporte de préférence, outre le filtre de Kalman mentionné en premier et appelé filtre principal, M autres filtres de Kalman dits filtres auxiliaires de rang j, j entier variant de 1 à M, et M supérieur à 1, et en ce que chaque canal de traitement numérique reçoit des corrections de M récepteurs fixes de rang j placés dans la station au sol et calcule :

- d'une part une moyenne des M premières corrections et une moyenne des M deuxièmes corrections, ces moyennes servant de termes correctifs pour élaborer les premières et deuxièmes données numériques pour le filtre principal
- d'autre part, pour chaque rang j, une moyenne de M-1 premières corrections et une moyenne de M-1 deuxièmes corrections, excluant les corrections issues du récepteur de rang j, ces moyennes servant de termes correctifs pour élaborer les premières et deuxièmes données numériques pour le filtre de rang j.

D'autres caractéristiques et avantages de l'invention ressortiront de la description ci-après d'un mode de réalisation donné à titre d'exemple. Cette description sera faite en regard des dessins joints dans lesquels :

- La figure 1 représente schématiquement l'architecture d'un récepteur d'un système GPS selon l'invention ;
- La figure 2 représente un organigramme de fonctionnement du filtre de Kalman récepteur selon l'invention traitant un signal mono-fréquence ;
- La figure 3 représente un organigramme de fonctionnement du filtre de Kalman récepteur selon l'invention traitant un signal bi-fréquence ;
- La figure 4 représente la structure du vecteur d'état X dans le cas d'une évaluation des erreurs liées à l'atmosphère et d'une mesure réalisée sur un signal bi-fréquence ;

- La figure 5 représente schématiquement l'architecture d'un récepteur d'un système GPS selon l'invention en fonctionnement différentiel ;
- La figure 6 représente un schéma d'obtention des rayons de protection calculés dans le récepteur GPS selon l'invention en fonctionnement absolu, lorsque m satellites sont visibles ;
- La figure 7 représente un schéma d'obtention des rayons de protection calculés dans le récepteur GPS selon l'invention en fonctionnement différentiel lorsque la correction différentielle est calculée par M récepteurs au sol.

Pour faciliter la lecture de la description, les mêmes repères désigneront les mêmes éléments dans les différentes figures.

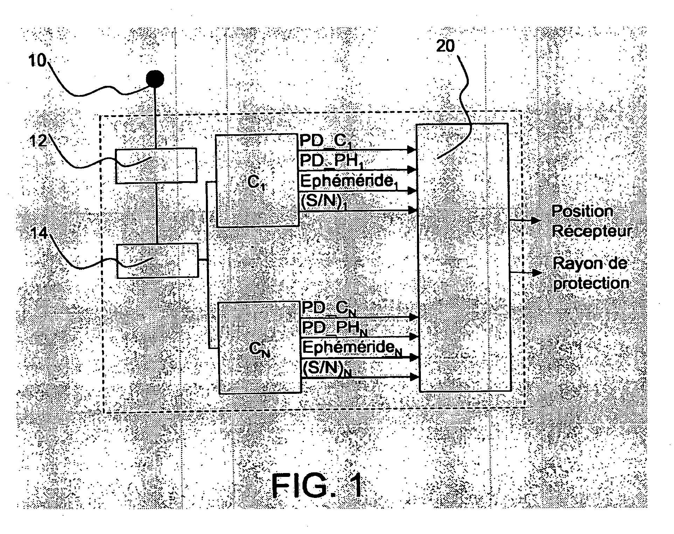

La figure 1 représente schématiquement l'architecture d'un récepteur de signaux d'un système de radionavigation par satellite. Un récepteur GPS comporte classiquement une antenne 10, un circuit analogique 12 effectuant des amplifications et changements de fréquence, un convertisseur analogique-numérique 14, et au moins N canaux de traitement numérique $C_1$ à $C_N$ si on veut recevoir simultanément les signaux en provenance d'au moins m satellites, m étant inférieur à N, le canal $C_i$ de rang i étant affecté au satellite i.

Chaque canal numérique $C_i$ de rang i reçoit un signal numérisé contenant l'ensemble des signaux satellites qu'il soumet à une double boucle d'asservissement permettant d'une part de synchroniser en phase une porteuse localement générée avec la porteuse issue du satellite i et d'autre part de synchroniser un code pseudo-aléatoire généré localement avec un code identique présent dans le signal satellite et propre à ce satellite. Les canaux de traitement numérique sont tous identiques à l'exception de leur générateur de code pseudo-aléatoire qui est programmé pour sélectionner un satellite déterminé.

Les deux boucles d'asservissement comportent chacune deux oscillateurs à commande numérique dont le contenu représente :

- pour le premier oscillateur, la phase instantanée du code pseudo-aléatoire local (aligné sur le code présent dans le signal), qui constitue la mesure de la phase instantanée du code reçu.
- pour le deuxième oscillateur, la phase instantanée de la porteuse locale (alignée sur la phase de la porteuse présente dans le signal reçu du satellite, au déphasage près introduit par les circuits du récepteur), qui constitue la mesure de la phase instantanée de la porteuse reçue.

La mesure de la phase instantanée du code dans le canal $C_i$ est utilisée pour calculer une première donnée numérique appelée pseudo-distance de code $PD\_C_i$, représentant une première mesure de la pseudo-distance entre le récepteur et le satellite de rang i ; cette mesure est non ambiguë mais assez bruitée.

La mesure de la phase instantanée de la porteuse dans le canal $C_i$ est utilisée pour calculer une deuxième donnée numérique, appelée pseudo-distance de porteuse $PD\_PH_i$, représentant une deuxième mesure de la pseudo-distance entre le récepteur et le satellite de rang i ; elle est peu bruitée mais ambiguë.

On dispose donc dans chaque canal de traitement numérique de deux mesures indépendantes $PD\_C_i$ et $PD\_PH_i$ d'une même pseudo-distance séparant le récepteur de chaque satellite. Les deux mesures de pseudo-distances $PD\_C_i$ et $PD\_PH_i$ (i désignant un numéro de satellite) sont obtenues sous forme de durées de propagation de signal entre le satellite de rang i et le récepteur le long de l'axe (axe satellite) joignant le satellite et le récepteur.

Les canaux numériques établissent également d'autres informations, en particulier des bits de données représentant des informations issues des satellites (éphémérides permettant de calculer à tout moment la position des satellites).

Enfin, les canaux élaborent, en fonction des conditions de réception, une mesure du rapport signal/bruit $(S/N)_i$ pour chaque satellite. Le niveau de bruit, qui permet de calculer l'écart type de l'erreur de mesure due au bruit thermique, est mesuré par le traitement du signal effectué au sein du canal numérique de rang i, de même que le niveau de signal venant du satellite de rang i.

Ces données alimentent un calculateur 20 qui a pour fonction de calculer la position du récepteur ainsi qu'un rayon de protection. En pratique le récepteur calcule non seulement la position mais aussi la vitesse du récepteur et le temps à l'instant de mesure, l'ensemble étant généralement appelé point PVT.

Le calculateur 20 fournit en sortie un point PVT et une valeur de rayon de protection. Cette valeur est calculée à partir des précisions de mesures des différents satellites et d'un seuil de probabilité de non-intégrité qu'on s'impose de ne pas dépasser. Si on veut prendre en compte des risques de non-continuité, la valeur est calculée également à partir d'autres considérations sur lesquelles on reviendra plus loin et qui font intervenir un seuil de probabilité de non-continuité qu'on s'impose de ne pas dépasser.

Selon l'invention, le calculateur 20 utilise, pour le calcul du point PVT, un filtre de Kalman étendu dont les données d'entrée comprennent non seulement la première donnée numérique (pseudo-distance de code obtenu à partir de la mesure de la phase instantanée du code, non lissée) mais aussi la deuxième donnée numérique (pseudo-distance de porteuse obtenue à partir de la mesure de la phase instantanée de porteuse).

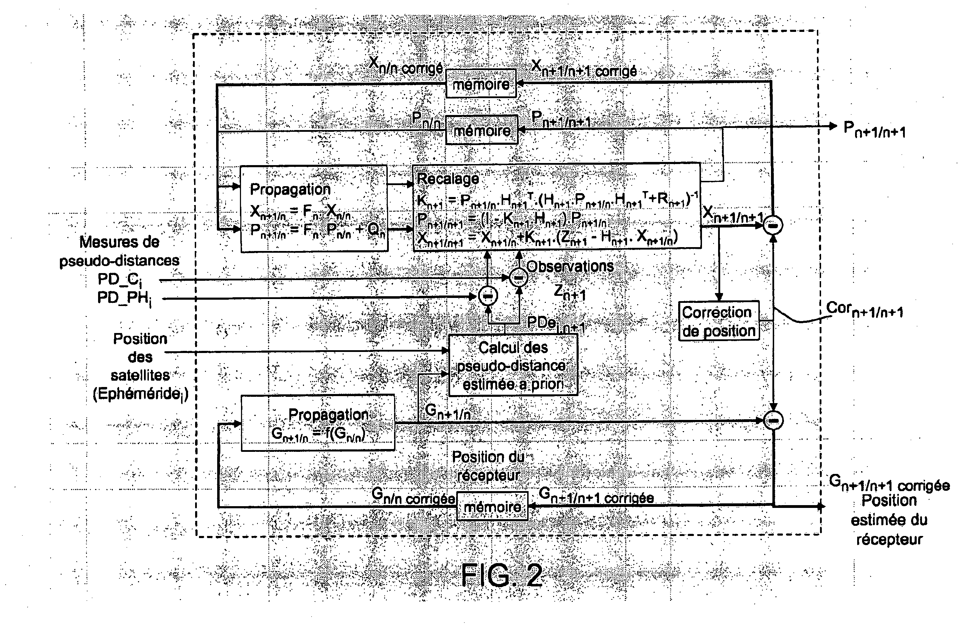

La figure 2 représente un organigramme de fonctionnement de ce filtre de Kalman étendu (qui est un filtrage algorithmique mis en oeuvre sur des données numériques). Le filtre qui est décrit suppose qu'il y a m satellites observés par le récepteur GPS.

On rappelle le principe du filtrage de Kalman :

Le filtrage de Kalman utilise un modèle d'état, établi sur la base de la connaissance (avérée ou supposée) du comportement des grandeurs physiques liées aux inconnues que l'on cherche à déterminer (en l'occurrence la position du récepteur) et aux mesures disponibles (en l'occurrence les pseudo-distances de code et de porteuse).

Ce modèle d'état est constitué de :

- un vecteur d'état $X_n$ représentant les grandeurs physiques modélisées à l'instant $t_n$, comportant un nombre de composantes $N_{état}$ qui est a priori sans rapport avec m le nombre de satellite reçu.
- un modèle de propagation, de la forme :

$$X_{n+1} = F_n . X_n + V_n$$

où:

$X_{n+1}$ est le vecteur d'état à l'instant $t_{n+1}$

$F_n$ est la matrice de propagation sur $[t_n, t_{n+1}]$, de dimension $N_{état}.N_{état}$

$V_n$ est le vecteur bruit de propagation sur $[t_n, t_{n+1}]$, blanc, gaussien, de moyenne nulle, de matrice de covariance $Q_n = E[V_n^T . V_n]$ (où $V_n^T$ est le vecteur transposé de $V_n$) et de dimension $N_{état}$.

- un modèle d'observation, de la forme :

$$Z_n = H_n . X_n + W_n$$

Où:

$Z_n$ est le vecteur d'observation à l'instant $t_n$, de dimension $N_{obs}$

$H_n$ est la matrice d'observation à l'instant $t_n$, de dimension $N_{obs}.N_{état}$

$W_n$ est le vecteur bruit de mesure à l'instant $t_n$, blanc, gaussien, de moyenne nulle, de matrice de covariance $R_n = E[W_n^T . W_n]$ (où $W_n^T$ est le vecteur transposé de $W_n$) et de dimension $N_{obs}$.

Dans ce modèle d'état, le vecteur d'état $X_n$ est de valeur a priori inconnue. Il n'est pas directement accessible par la mesure, contrairement au vecteur d'observations $Z_n$, mais seulement par l'intermédiaire du modèle d'observation.

Le filtre de Kalman réalise l'estimation du vecteur d'état par un calcul de propagation, à partir du modèle de propagation, et par un calcul de recalage, à partir des observation et du modèle d'observation.

Pour cela le filtre utilise deux variables :

- le vecteur d'état estimé, noté $X_{n/n}$ après recalage à l'instant $t_n$, noté $X_{n+1/n}$ après propagation entre les instants $t_n$ et $t_{n+1}$, et noté $X_{n+1/n+1}$ après recalage à l'instant $t_{n+1}$, de dimension $N_{état}$.
- la matrice de covariance de l'état estimé, notée $P_{n/n}$ après le recalage à l'instant $t_n$, notée $P_{n+1/n}$ après la propagation entre les instants $t_n$ et $t_{n+1}$, et noté $P_{n+1/n+1}$ après recalage à l'instant $t_{n+1}$, de dimension $N_{état}.N_{état}$

Pour réaliser le calcul de propagation, le filtre utilise les formules :

Pour le vecteur d'état estimé :

$$X_{n+1/n} = F_n . X_{n/n}$$

Pour la matrice de covariance :

$$P_{n+1/n} = F_n \cdot P_{n/n} \cdot F_n^T + Q_n$$

(où $F_n^T$ est la matrice transposée de $F_n$)

Pour réaliser le calcul de recalage, le filtre utilise les formules :

Pour le gain de recalage :

$$K_{n+1} = P_{n+1/n} \cdot H_{n+1}^T \cdot ( H_{n+1} \cdot P_{n+1/n} \cdot H_{n+1}^T + R_{n+1} )^{-1}$$

(où $H_{n+1}^T$ est la matrice transposée de $H_{n+1}$)
Pour le vecteur d'état estimé :

$$X_{n+1/n+1} = X_{n+1/n} + K_{n+1} \cdot ( Z_{n+1} - H_{n+1} \cdot X_{n+1/n} )$$

Pour la matrice de covariance :

$$P_{n+1/n+1} = ( Id_{N\text{état}} - K_{n+1} \cdot H_{n+1} ) \cdot P_{n+1/n}$$

(où $Id_{N_{\text{état}}}$ est la matrice identité de dimension $N_{\text{état}} \cdot N_{\text{état}}$)
Au départ, le vecteur d'état $X_0$ est initialisé à zéro et la matrice $P_0$ est initialisée avec les variances et covariances représentatives de l'incertitude sur les grandeurs physique modélisées dans le vecteur d'état.
Le calcul de propagation fait intervenir les matrice $F_n$ et $Q_n$ pour déterminer le vecteur d'état estimé propagé $X_{n+1/n}$ à partir du vecteur d'état estimé recalé $X_{n/n}$ et la matrice de covariance propagée $P_{n+1/n}$ à partir de la matrice de covariance recalée $P_{n/n}$.
Le calcul de recalage fait intervenir les observations $Z_{n+1}$ issues des mesures du récepteur et les matrices $H_{n+1}$ et $R_{n+1}$, pour déterminer le vecteur d'état estimé recalé $X_{n+1/n+1}$ à partir du vecteur d'état estimé propagé $X_{n+1/n}$ et la matrice de covariance recalée $P_{n+1/n+1}$ à partir de la matrice de covariance propagé $P_{n/n}$.

Ensuite on incrémente n de 1 (soit n = n+1), on recommence la propagation, puis le recalage, et ainsi de suite.

Interprétation Physique du filtre de Kalman :

Les coefficients de la matrice de covariance $P_n$ représentent la variance de chacune des composantes du vecteur d'état estimé (termes diagonaux) et la covariance des différentes paires de composantes de ce vecteur (termes non diagonaux). La matrice $P_n$ représente en quelque sorte le degré de confiance qu'on attribue au vecteur d'état estimé. La matrice $P_n$ constitue une sortie du filtre de Kalman utilisés pour le calcul des rayons de protection comme cela sera présenté plus loin.
La matrice de propagation $F_n$ sert à établir une relation linéaire entre le vecteur d'état avant propagation et après propagation.
La matrice de covariance $Q_n$ du bruit de propagation permet de quantifier les approximations faites dans le modèle de propagation pour chaque composante du vecteur d'état $X_{n/n}$.
La matrice d'observations $H_n$ sert à établir une relation linéaire entre le vecteur d'état et les mesures en axes satellites; en particulier elle donne la relation entre l'erreur sur la position estimée en axes géographiques et l'écart induit par cette erreur entre la pseudo-distance calculée à partir de cette position estimée et la pseudo-distance mesurée. La matrice $H_n$ contient les cosinus directeurs des axes satellites, calculés à partir des positions des satellites obtenues grâce aux éphémérides.
La matrice de covariance $R_n$ des bruits de mesure caractérise le bruit propre des mesures du récepteur GPS. A cet effet, une donnée de rapport signal/bruit $(S/N)_i$ est de préférence fournie par le récepteur GPS pour chaque satellite. $R_n$ est une matrice carrée de dimension $N_{obs} \cdot N_{obs}$.

Principe d'un filtre de Kalman étendu :

La relation entre la position du récepteur et les mesures de pseudo-distance n'étant pas linéaire, on utilise un filtre Kalman étendu pour linéariser cette relation. Pour cela le modèle d'état utilise un vecteur d'état dont les premières composantes représentent non pas la position, mais l'erreur sur la position estimée.

Les composantes du vecteur d'observations $Z_{n+1}$ sont constituées par la différence les pseudo-distances mesurées et les pseudo-distances estimées à la date $t_{n+1}$.

La pseudo-distance estimée $PDe_{i,n+1}$ sur chaque axe satellite est calculée par la distance euclidienne entre la position du satellite dans le repère terrestre à l'instant $t_{n+1}$ (donnée par les éphémérides) et la position estimée du récepteur dans le même repère au même instant. Cette position estimée $G_{n+1/n}$ peut être, dans le cas plus simple, la valeur précédemment calculée $G_{n/n}$ du point PVT (à l'instant $t_n$) ; cependant, dans une variante plus élaborée, elle peut être estimée à partir d'autres informations : par exemple, connaissant le vecteur vitesse du récepteur, on peut calculer une position estimée $G_{n+1/n} = f(G_{n/n})$ plus précise en extrapolant à partir de ce vecteur vitesse et du point PVT précédemment calculé $G_{n/n}$.

Sur la figure 2, on a représenté une mémoire recueillant $X_{n+1/n+1}$ et fournissant $X_{n/n}$ pour indiquer que la valeur de vecteur d'état introduite dans le modèle de propagation pour le calcul de $X_{n+1/n}$ daté de l'instant $t_{n+1}$ est la valeur de vecteur d'état $X_{n/n}$ qui a été calculée à l'instant précédent $t_n$. De même, on a représenté une mémoire pour la matrice de covariance $P_{n/n}$ et pour la position estimée $G_{n/n}$.

Principe du filtre de Kalman selon l'invention :

Dans le vecteur d'observations on trouve, pour chaque axe satellite de rang i, deux composantes qui sont :

- d'une part la différence entre la pseudo-distance $PD\_C_i$ de code (mesurée) et la pseudo-distance $PDe_{i,n+1}$ estimée (calculée) ;
- d'autre part la différence entre la pseudo-distance $PD\_PH_i$ de porteuse (mesurée) et la même pseudo-distance $PDe_{i,n+1}$ estimée (calculée). La dimension du vecteur d'observation est donc $2.m$ (= $N_{obs}$).

Dans le récepteur selon l'invention, le nombre des composantes du vecteur d'état ($N_{état}$) est au minimum égal à $4+m$ : Ces composantes représentent les erreurs de la position estimée du récepteur dans le repère terrestre, selon les trois coordonnées spatiales, l'erreur sur la date de la mesure (biais de temps dû à l'horloge du récepteur) et pour chaque satellite une ambiguïté sur la mesure de la phase de porteuse.

En sortie du modèle de recalage, on aboutit à évaluer $X_{n+1/n+1}$ le vecteur d'état estimé à l'instant $t_{n+1}$. Cette valeur du vecteur d'état estimée est utilisée pour calculer une nouvelle itération au travers du filtre de Kalman. Elle sert également à élaborer une correction $Cor_{n+1/n+1}$ sur la position estimée, de façon à ramener, à chaque itération ou avec une période plus longue, les valeurs d'erreur de position du vecteur d'état à zéro. Si les composantes d'erreur de positions sont dL, dG, dh, la correction consiste à soustraire ces valeurs du vecteur d'état. Cette correction est appliquée simultanément à $X_{n+1/n+1}$ et $G_{n+1/n}$ pour donner $X_{n+1/n+1}$ corrigé et $G_{n+1/n+1}$ corrigé. On applique la correction de position $Cor_{n+1/n+1}$ à la fois à la position estimée et au vecteur d'état estimé pour garder la cohérence entre l'estimation de l'erreur sur la position estimée et la position estimée. En fait, la nouvelle itération du filtre de Kalman utilise $X_{n+1/n+1}$ corrigé et non pas $X_{n+1/n+1}$ ; de même, c'est la valeur de $G_{n/n \text{ corrigée}}$ qui est utilisée pour obtenir $G_{n+1/n}$.

La configuration décrite jusqu'ici concerne un récepteur réalisant une mesure directe (ou absolue) d'un signal GPS mono-fréquence. Dans ce cas, les sources d'erreurs sur le calcul de la position du récepteur sont notamment liées à la nature des couches d'atmosphère traversées qui induit un retard dans la propagation du signal sur l'axe satellite, différent pour chaque satellite, à l'origine d'une erreur sur la mesure de la durée de propagation et par conséquent sur la mesure du positionnement, ou encore aux erreurs de multi-trajets causées par des réflexions du signal sur des objets à proximité du récepteur.

Il existe au moins trois autres configurations de récepteur de système GPS selon l'invention qui permettent de s'affranchir plus ou moins complètement de ces erreurs : une seconde configuration (bifréquence) parvient à limiter des effets liés à la propagation du signal dans l'ionosphère, deux autres configurations (différentielle et relative) permettent en plus, de réduire encore les erreurs troposphérique et système et les erreurs dues au bruit thermique et aux multi-trajets.

La propagation du signal dans l'ionosphère produit sur les mesures de phase de code et de porteuse des effets qui dépendent de la fréquence de la porteuse. Cette erreur est inversement proportionnelle au carré de la fréquence, elle est de signe positif sur les mesures de code (retard de groupe) et de signe opposé sur les mesures de phase de porteuse (avance de phase).

Une double mesure réalisée sur deux porteuses de fréquences différentes permet de s'affranchir des effets de l'ionosphère en combinant les deux mesures simultanées du code et de phase des porteuses. La configuration du récepteur GPS selon l'invention visant à réduire l'influence de l'atmosphère traversée met en œuvre une mesure bi-

fréquence.

Si l'on considère une constellation de m satellites émettant simultanément deux signaux de fréquences respectives $L_1$ et $L_2$. Un récepteur GPS selon l'invention comporte des canaux $C_i$, qui comprennent chacun deux sous-canaux $SCL1_i$ et $SCL2_i$ recevant un chacun un signal à fréquence de porteuse différente, provenant du même satellite. Chaque sous-canal produit une mesure de pseudo-distance par le code et une mesure de pseudo-distance par la porteuse.

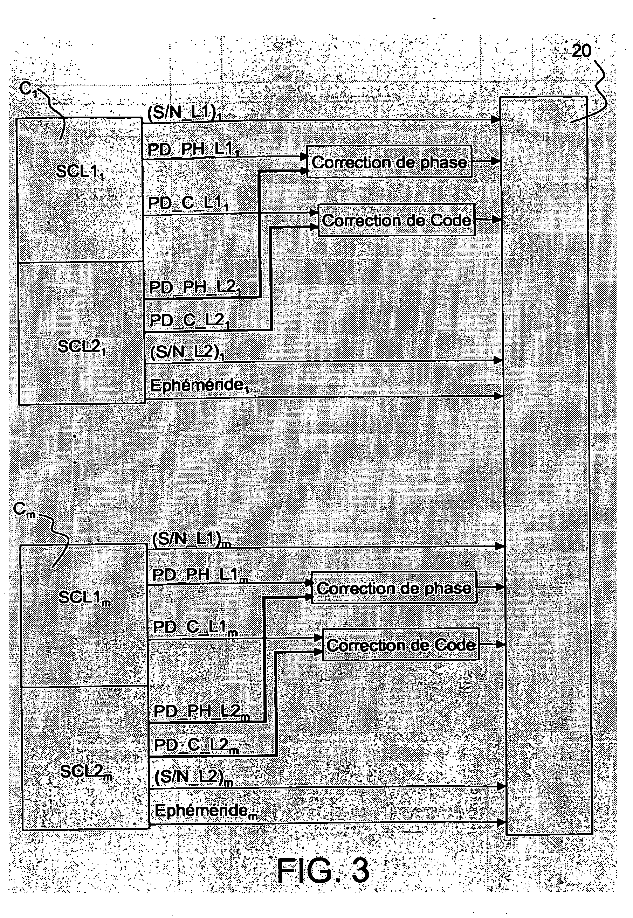

Les interfaces d'un canal du récepteur (Canal $C_i$) fonctionnant dans cette configuration sont représentées sur la figure 3, elles sont légèrement différentes de celles présentées sur la figure 1. Par contre, l'organigramme du filtre de Kalman intégré au calculateur reste inchangé par rapport à celui présenté sur la figure 2.

Les corrections ionosphériques appliquées aux mesures de phase de porteuses sont largement décrites dans la littérature, elles consistent à faire une combinaison linéaire des mesures de code faites aux deux fréquences et une combinaison linéaire des mesures de phase de porteuse faites aux deux fréquences. Ces combinaisons aboutissent à une mesure de pseudo-distance par la porteuse et une mesure de pseudo-distance par le code ; ce sont ces deux mesures qui sont appliquées au filtre de Kalman de la figure 2 pour établir les observations $Z_{n+1}$.

On peut aussi, plutôt que de combiner les mesures en amont du filtre de Kalman, les combiner dans le filtre lui-même : dans ce cas, on entre directement dans le filtre les mesures réalisées sur les deux fréquences pour établir deux fois plus d'observations. Ces mesures sont deux mesures de pseudo-distances réalisées grâce au code et deux mesures de pseudo-distances réalisées grâce à la phase de porteuse, sur chaque satellite. Cela permet de ne pas perdre la continuité de la mesure si une des fréquences disparaît.

On peut également modéliser une autre erreur qui est l'erreur due à la propagation dans la troposphère. Cette erreur est commune aux quatre mesures de pseudo-distances, de code et de porteuse, sur L1 et sur L2, elle est décorrélée entre les satellites et présente une dynamique très lente. On peut aussi lui assimiler les erreurs dues à l'imprécision sur les positions et les horloges des satellites, qui présentent les mêmes caractéristiques, et qui se manifestent sur la pseudo-distance estimée calculée, donc qui se retrouvent dans l'observation Z. Ces erreurs deviennent prépondérantes lorsque l'erreur ionosphérique est éliminée grâce à un procédé bi-fréquence.

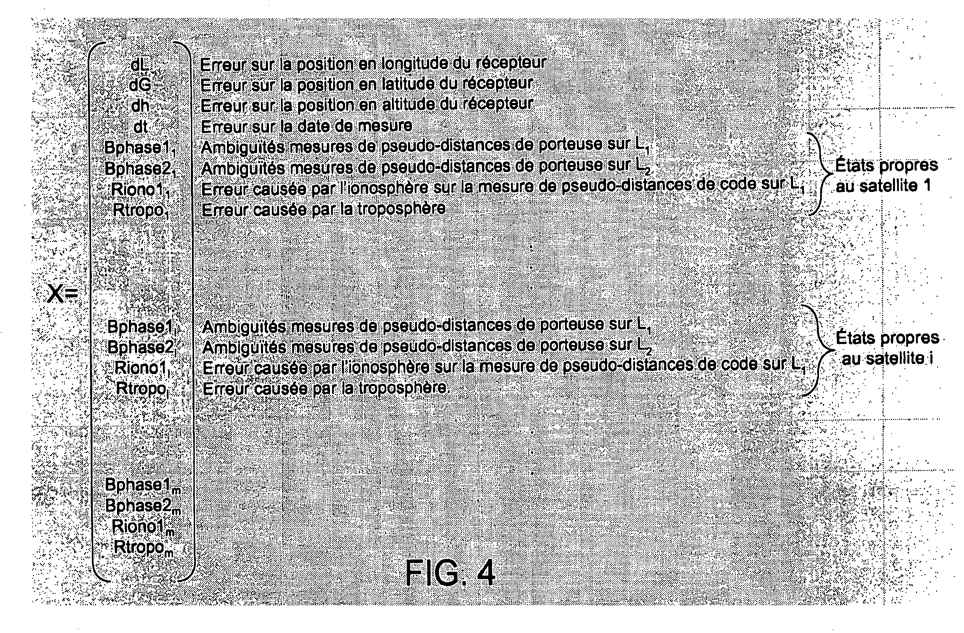

La figure 4 représente un vecteur d'état dans le cas d'un filtre de Kalman selon l'invention, intégrant des mesures bi-fréquences, avec dans le modèle d'état, la modélisation de l'erreur ionosphérique et l'erreur troposphérique. Dans ce cas, les quatre premières composantes du vecteur d'état sont les erreurs sur la position du récepteur, exprimée par exemple suivant la longitude (dL), la latitude (dG) et sur l'altitude (dh) et sur la date de la mesure (dt). On trouve ensuite pour chaque satellite un groupe de quatre composantes. Les deux premières sont nommées $Bphase1_i$ et $Bphase2_i$ et représentent les ambiguïtés des mesures de pseudo-distances de porteuse sur respectivement les fréquences $L_1$ et $L_2$. La troisième composante ($Riono1_i$) modélise l'erreur provoquée par l'ionosphère sur la mesure de pseudo-distances de code $L_1$. La quatrième composante ($Rtropo_i$) modélise l'erreur provoquée par la troposphère, les erreurs sur les autres pseudo-distances étant déduites par changement de signe (porteuse $L_1$) ou en rapport inverse du carré des fréquences (code et porteuse $L_2$). La modélisation des erreurs troposphériques et ionosphériques peut être d'un ordre supérieur pour mieux rendre compte de la dynamique temporelle de son effet, à condition de rajouter au moins un état supplémentaire, pour chaque satellite reçu. La modélisation de l'erreur ionosphérique et de l'erreur troposphérique peut naturellement être réalisée dans la première configuration (mono-fréquence) et dans ce cas, le vecteur d'état décrit sur la figure 4 comporte m composantes en moins (celles qui concernent les ambiguïtés des secondes mesures de pseudo-distances de porteuse).

Le récepteur selon l'invention peut être mis en oeuvre suivant une troisième configuration avantageuse en ce qu'elle réduit simultanément les erreurs liées au système et à l'atmosphère ainsi que les erreurs de multi-trajets et de bruit thermique. Son principe repose sur une correction différentielle des mesures de pseudo-distance.

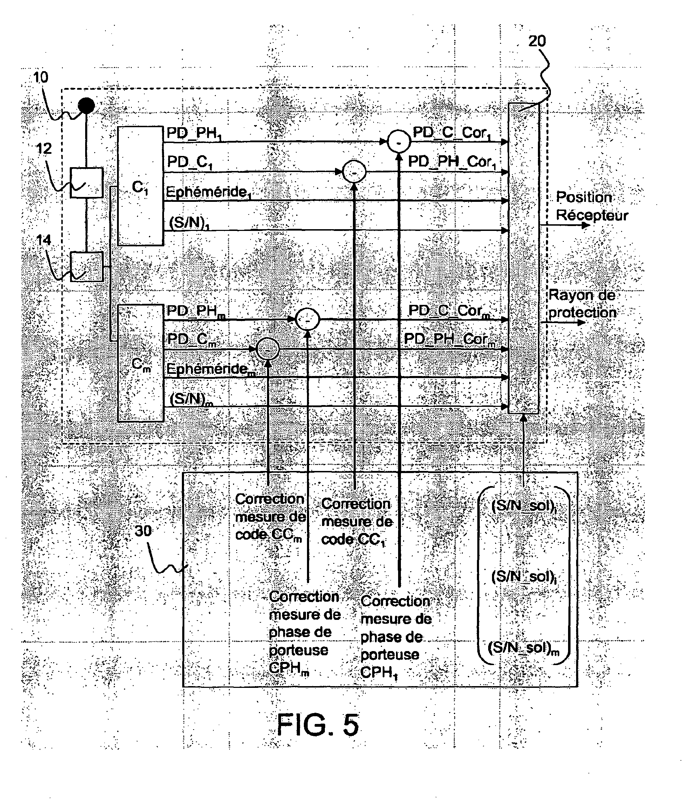

La figure 5 représente l'architecture d'un récepteur d'un système GPS en fonctionnement différentiel. En plus des repères de la figure 1, apparaît un récepteur 30 placé au sol, à proximité du récepteur embarqué. La position du récepteur sol 30 est connue précisément. Si le récepteur de la station sol reçoit un signal provenant d'un satellite, par exemple le satellite de rang i, la position du satellite lui est transmise au moyen des éphémérides. Ainsi, le récepteur sol peut calculer la distance théorique qui le sépare du satellite et comparer cette valeur aux deux mesures de pseudo-distance qu'il effectue à partir du signal délivré par le satellite (par mesure de code et par mesure de phase de la porteuse respectivement). La différence entre la distance théorique et la pseudo-distance mesurée par le code est nommée $CC_i$. La différence entre la distance théorique et la pseudo-distance mesurée par la phase de porteuse est nommée $CPH_i$. Ces deux termes sont propres au satellite i et à sa position à l'instant $t_n$, ils portent la marque des erreurs liées à l'émission du signal, à sa propagation sur l'axe satellite jusqu'à sa réception par le récepteur sol. Ces mêmes erreurs sont présentes sur les mesures réalisées par le récepteur embarqué. La communication par le récepteur sol de $CC_i$ et $CPH_i$ au récepteur embarqué permet donc à ce dernier d'opérer par soustraction une correction des mesures $PD\_C_i$ et $PD\_PH_i$ de la pseudo-distance qui le sépare du satellite i. $PD\_C\_Cor_i$ et $PD\_PH\_Cor_i$ sont les résultats de cette correction de mesure de pseudo-distances.

Si m satellites sont visibles, le récepteur embarqué et le récepteur sol réalisent chacun 2.m mesures de pseudo-distances et le récepteur sol transmet au récepteur embarqué une correction pour chaque mesure. Finalement, 2.m mesures de pseudo-distances, corrigées par autant de termes correctifs calculés au sol, alimentent le calculateur 20.

Les erreurs liées au « système » et à la transmission atmosphérique sont fortement réduites par cette configuration et ceci d'autant plus que le récepteur embarqué a une position proche de celle du récepteur sol. En particulier, il n'est dans ce cas plus nécessaire d'évaluer les erreurs liées à la propagation dans l'atmosphère, seule l'ambiguïté de mesure de la phase de la porteuse de chaque satellite reste à évaluer.

Le nombre et la nature des composantes du vecteur d'état $N_{état}$ à traiter dans le filtre de Kalman sont équivalents à ceux requis pour une mesure absolue sur un signal mono-fréquence (pour laquelle $N_{état}$ est supérieur à 4+m). Le nombre de composantes du vecteur d'observations vaut au minimum 2.m. Cette configuration peut être réalisée à la condition que le récepteur embarqué ait les moyens de recevoir les corrections de la station sol et de les soustraire aux mesures de pseudo-distances correspondantes. Dans les systèmes GPS différentiels les corrections sont classiquement transmises au récepteur par voie hertzienne.

Le récepteur selon l'invention peut être mis en oeuvre suivant une quatrième configuration, dans un mode de navigation relative, avantageux en ce qu'il permet au récepteur mobile de se positionner non pas en absolu mais par rapport à un autre récepteur mobile de référence, en éliminant les erreurs système et atmosphérique, communes aux deux récepteurs. Dans ce cas les observations du filtre de Kalman sont obtenues en soustrayant aux pseudo-distances de code et de porteuse de chaque satellite les pseudo-distances respectivement de code et de porteuse mesurées par le récepteur mobile de référence et transmise par un canal hertzien dédié (au lieu des pseudo-distances estimées par calcul). C'est le cas par exemple de l'atterrissage d'un aéronef sur un porte-avion où les calculs de positions effectués par le récepteur sont exprimés dans un repère centré sur le porte-avions.

Le récepteur selon l'invention peut être mis en oeuvre avec un filtre de Kalman intégrant le modèle d'erreur d'une aide inertielle. Dans ce cas le vecteur d'état intègre dans ses composantes les erreurs inertielles en vitesse, attitudes, biais des accéléromètres et dérives des gyromètres. La matrice de propagation F intègre le modèle linéarisé d'évolution des erreurs inertielles. La position estimée est la position inertielle, propagée grâce aux incréments de vitesse et d'angles inertiels mesurés par les capteurs inertiels (accéléromètres et gyromètre respectivement), par un calcul d'intégration utilisant par exemple l'algorithme des quaternions.

Calcul des rayons de protection

On l'a déjà évoqué, un rayon de protection est une mesure très importante dans certaines applications où il est indispensable d'assurer l'intégrité des données. On rappelle que le rayon de protection RP d'une mesure, pour une probabilité de non-intégrité prédéterminée $P_{ni}$, est une borne supérieure de l'écart entre la valeur calculée et la valeur réelle de la grandeur mesurée, telle qu'on a une probabilité inférieure à $P_{ni}$ que la valeur réelle soit éloignée de la valeur calculée d'une distance supérieure à RP. Autrement dit, il y a donc une probabilité maximale $P_{ni}$ pour que la valeur réelle soit en dehors d'un cercle de rayon RP autour de la valeur qu'on a mesurée ou encore qu'il y a une probabilité maximale $P_{ni}$ de se tromper dans la détermination du rayon de protection

Ce rayon de protection est calculé à partir des écarts types des variables considérées. Il s'applique à chaque composante de l'état, mais en pratique, on s'intéresse aux variables de position. On peut calculer plus spécifiquement un rayon de protection vertical pour l'altitude et un rayon de protection horizontal pour la position en longitude et latitude, ces rayons n'ayant pas forcément la même valeur et n'étant pas utilisés de la même manière (le rayon de protection vertical est une donnée plus critique).

Le rayon de protection est en général une donnée qui est calculée puis comparée à un seuil fixé en fonction de l'application, le dépassement du seuil générant une alerte indiquant soit que la mesure de position ne peut pas être considérée comme suffisamment fiable dans le contexte de l'application (hypothèse $H_0$ définie ci-après), soit la présence supposée d'une panne (selon l'hypothèse $H_1$ définie ci-après). La nature de l'application fixe la probabilité maximale $P_{ni}$.

On évalue le rayon de protection $RP_{H0}$ en l'absence de panne de satellite, hypothèse communément désignée $H_0$. Par "panne" on entend une situation anormale où le satellite émet des signaux qui ont l'apparence de signaux normaux mais qui sont anormaux et conduisent à des erreurs de position.

Le rayon de protection $RP_{H0}$ est lié directement à la variance de la grandeur mesurée et à la probabilité $P_{ni}$ que cette erreur dépasse le rayon de protection par le tableau approximatif suivant, supposant une loi de probabilité gaussienne sur les erreurs de mesures :

| Valeur de $P_{ni}$ | Valeur de $k_{PNI}$ | Valeur de $RP_{H0}$ |
|---|---|---|
| $10^{-1}$ | 1.64 | $1.64 \times \sigma$ |
| $10^{-2}$ | 2.58 | $2.58 \times \sigma$ |
| $10^{-3}$ | 3.28 | $3.28 \times \sigma$ |

(suite)

| Valeur de $P_{ni}$ | Valeur de $k_{PNI}$ | Valeur de $RP_{H0}$ |
|---|---|---|
| $10^{-4}$ | 3.89 | $3.89 \times \sigma$ |
| $10^{-7}$ | 5.33 | $5.33 \times \sigma$ |
| $10^{-9}$ | 6.11 | $6.11 \times \sigma$ |

La variance est le carré de l'écart type $\sigma$ lié à la grandeur mesurée. La variance de la position mesurée est donc le coefficient de la diagonale de la matrice de covariance P qui correspond à la grandeur mesuré. Si l'altitude est la grandeur mesurée et se situe au troisième rang dans le vecteur d'état et dans la matrice de variance P, la variance de l'altitude est le troisième coefficient dans la diagonale de cette matrice. L'écart type $\sigma$ est la racine carrée de cette variance, il se déduit donc de la matrice P dans un filtre de Kalman.

Selon la probabilité de non-intégrité $P_{ni}$ qu'on se fixe (et donc selon l'application envisagée) on peut donc déterminer un coefficient $K_{PNI}$ tel que le rayon de protection $RP_{H0}$ sera égal à $k_{PNI}.\sigma$. Le coefficient $K_{PNI}$ prend une valeur comprise entre 1 et 7 conformément aux valeurs du tableau précédent.

Dans le cas d'un récepteur voyant m satellites, $RP_{H0}$ est calculé à partir de la règle suivante :

$$RP_{H0} = SUP_{i=1 \text{ à } m}[\ k_{PNI}.\sigma_i\ ]$$

Où $\sigma_i$ sont des écarts types des variables considérées.

Dans le récepteur GPS selon l'invention, il est donc possible de calculer le rayon de protection $RP_{H0}$ à partir des coefficients de la matrice de covariance P tels qu'ils apparaissent à l'instant de mesure. Si la configuration des satellites évolue, la valeur du rayon de protection est mise à jour en même temps. Si un satellite disparaît de la constellation visible, le rayon de protection ne se dégrade que progressivement. Si au contraire un satellite nouveau apparaît, le rayon de protection diminue instantanément, ce qui est très avantageux.

On peut également calculer un rayon de protection $RP_{H1}$ prenant en compte le risque de panne d'un satellite, hypothèse communément désignée $H_1$. Le récepteur utilise pour cela la méthode bien connue sous le nom de « maximum de séparation » : Dans ce cas, le récepteur comporte non pas un seul filtre de Kalman mais un filtre principal qui fonctionne comme on l'a décrit précédemment et m filtres auxiliaires, si m est le nombre de satellites pouvant être vus en même temps. Les m filtres auxiliaires fonctionnent en parallèle avec le filtre principal et suivant le même principe que ce dernier. Mais le filtre auxiliaire de rang i reçoit les signaux de tous les satellites sauf celui provenant du satellite de rang i.

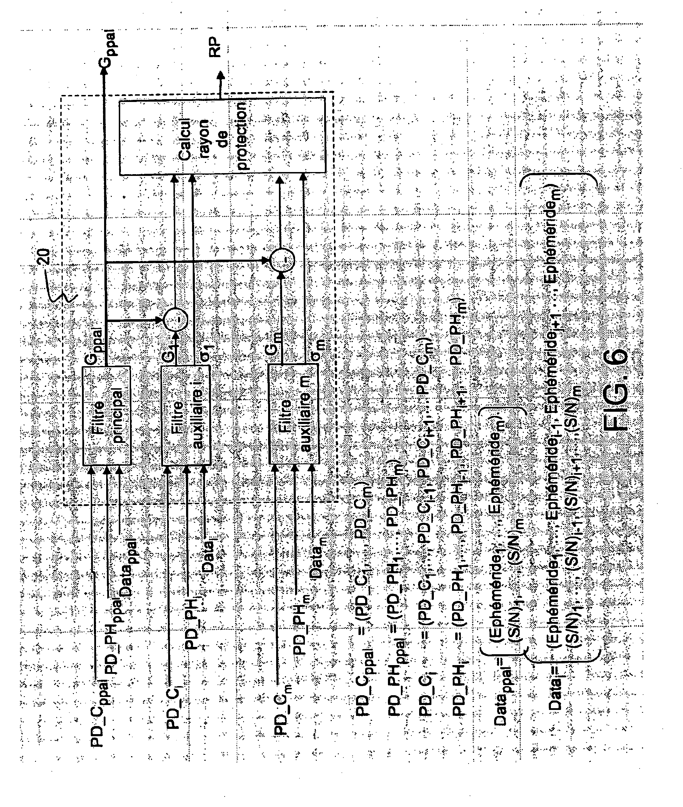

La figure 6 représente un schéma d'obtention des différents rayons de protection calculés pour un récepteur selon l'invention réalisant une mesure absolue de la position suivant les deux premières configurations décrites plus haut (GPS absolu, mono-fréquence et bi-fréquence). On reviendra plus loin sur le calcul du rayon de protection dans les troisièmes et quatrièmes configurations (GPS différentiel, référence fixe ou mobile).

On rappelle que le filtre principal utilise les m satellites, et que les m autres filtres excluent à chaque fois un satellite de rang i. Ces m filtres auxiliaires aboutissent chacun à une position et à des écarts-types associés pour chaque variable (par exemple altitude et distances horizontales). Dans le cas où aucun satellite n'est défectueux, les m+1 filtres fournissent des positions très proches les unes des autres. Mais si un satellite est défectueux, les positions fournies par les m+1 filtres divergent : m filtres (dont le filtre principal) sont perturbés par la mesure biaisée, et un seul filtre, celui qui n'utilise pas les mesures du satellite en panne, non connu a priori, reste intègre. Le calculateur estime les distances entre la position déterminée par le filtre principal et chacune des positions déterminées par les filtres auxiliaires. La plus grande de ces distances borne l'erreur sur la position du filtre principal car elle majore la distance entre la position déterminée par le filtre principal et celle du filtre intègre, aux erreurs de ce filtre près. Par exemple, si on s'intéresse au rayon de protection de l'altitude, le calculateur peut déterminer le maximum des distances entre l'altitude fournie par le filtre principal et l'altitude fournie par chacun des m filtres auxiliaires, majorée d'une quantité censée borner l'erreur sur l'altitude du filtre intègre et calculée par exemple à partir des matrice de covariance P des filtres auxiliaires.

Le facteur $k_{PND}$ dépend de la probabilité de non-détection $P_{nd}$ suivant la correspondance donnée dans le tableau suivant :

| Valeur de $P_{nd}$ | Valeur de $I_{PND}$ |
|---|---|
| $10^{-1}$ | 1,64 |

(suite)

| Valeur de $P_{nd}$ | Valeur de $I_{PND}$ |
|---|---|
| $10^{-2}$ | 2.58 |
| $10^{-3}$ | 3.28 |
| $10^{-4}$ | 3.89 |
| $10^{-7}$ | 5.33 |
| $10^{-9}$ | 6.11 |

En cas de panne d'un satellite, l'un des filtres auxiliaires donne une solution exacte dans un rayon de $k_{PND}.\sigma_i$, $\sigma_i$ étant l'écart type calculé par ce filtre auxiliaire et associé à la solution trouvée par ce filtre. Tous les autres filtres, y compris le filtre principal donnent une solution fausse, mais on ne sait pas quel est le filtre auxiliaire qui donne la solution exacte. On calcule donc la distance $d_i$ entre l'altitude donnée par le filtre principal et celle qui est donnée par un filtre auxiliaire, on ajoute $I_{PND}.\sigma_i$ à cette distance, $\sigma_i$ étant l'écart type correspondant à ce filtre. On réalise ce calcul pour les m filtres auxiliaires. On prend la valeur maximale parmi les m valeurs ainsi calculées, et cette valeur constitue le rayon de protection $RP_{H1}$ en cas de panne d'un satellite.

$$RP_{H1} = SUP_{i=1 \text{ à } m} [ d_i + k_{PND}.\sigma_i ]$$

Le calcul est similaire pour un rayon de protection horizontal, l'écart type considéré étant alors la racine carrée de la somme des variances en longitude et en altitude.

Si par exemple on désire une probabilité de non intégrité globale de $10^{-7}$ avec une probabilité de panne de $10^{-4}$ alors la probabilité $P_{nd}$ de non détection est $10^{-3}$ et $k_{PND} = 3$. Le rayon de protection $RP_{H1}$ qui va être calculé dans ce cas résulte de l'addition de deux termes : un premier terme lié à la probabilité de non détection de $10^{-3}$ ($k_{PND}.\sigma$) et un deuxième terme lié aux distances entre les positions déterminées par les m filtres auxiliaires de Kalman et la position déterminée par le filtre de Kalman principal.

Au final pour prendre en compte les deux hypothèses avec et sans panne de satellite, le rayon de protection $RP_{HUL}$ vaut :

$$RP_{HUL} = SUP [ RP_{H0} , RP_{H1} ]$$

Le rayon de protection $RP_{HUL}$ ainsi calculé fluctue avec les erreurs de position des différents filtres, que l'on retrouve sur les quantités $d_i$. Ce rayon de protection peut parfois prendre des valeurs anormalement grande si le tirage des bruits est défavorable. Ces valeurs peuvent dépasser un seuil d'alarme noté HAL, dépendant de la mission, induisant une non-continuité.

Dans le cas où l'on souhaite aussi assurer la continuité du service, on cherche une valeur seuil telle que la probabilité que le rayon de protection ainsi calculé dépasse ce seuil soit inférieure à la probabilité de non continuité que l'on se donne. Ce seuil, appelé « rayon de protection prévisible » ou $RP_{HIL}$ est calculé de la manière suivante :

$$RP_{HIL} = SUP[ SUP_{i=1 \text{ à } m}[ k_{PFA}.\sigma_{diff\,i} + k_{PND}.\sigma_i] , SUP_{i=1 \text{ à } m}[ k_{PNI}.\sigma_i ] ]$$

Où $\sigma_{diff\,i}$ est égal à la racine carrée du terme diagonal de la matrice $P_{diff}$ caractérisant la covariance du vecteur $(X_{n/n\,i} - X_{n/n})$, différence entre le vecteur d'état du filtre principal $(P_{n/n})$ et le vecteur d'état $(P_{n/n}\,i)$ du filtre auxiliaire i, à partir duquel on calcule $d_i$.

Cette matrice est égale à : $P_{diff} = P_{n/n\,i} - P_{n/n}$

Le facteur $k_{PFA}$ dépend de la probabilité de fausse alarme $P_{FA}$ suivant la correspondance donnée dans le tableau suivant:

| Valeur de $P_{FA}$ | Valeur de $K_{PFA}$ |
|---|---|
| $10^{-1}$ | 1.64 |
| $10^{-2}$ | 2.58 |
| $10^{-3}$ | 3.28 |
| $10^{-4}$ | 3.89 |
| $10^{-7}$ | 5.33 |
| $10^{-9}$ | 6.11 |

La probabilité de non-continuité que l'on se cherche à obtenir est égale à la probabilité de fausse alarme plus la probabilité de panne.

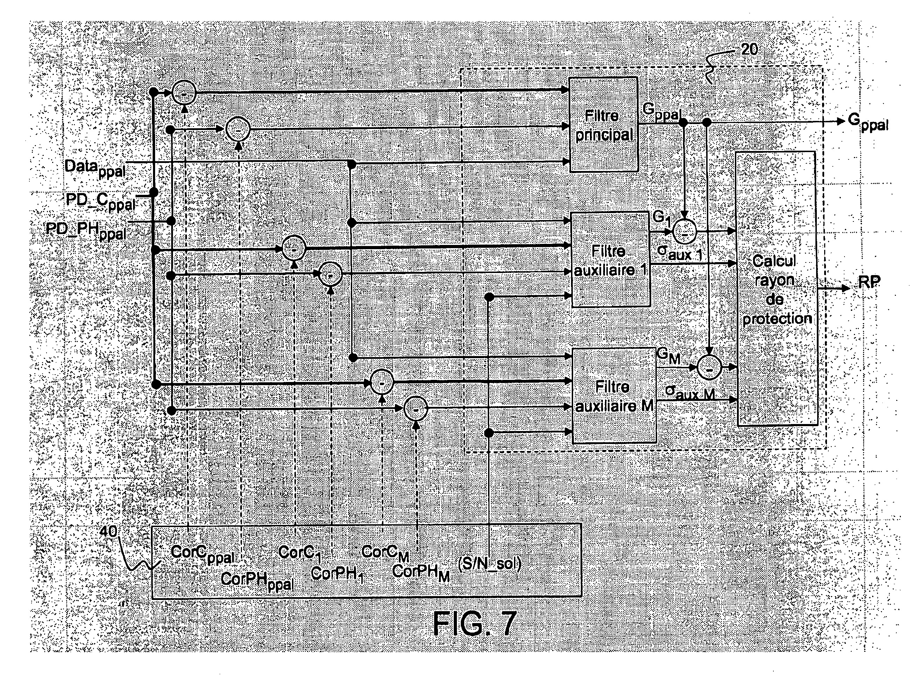

L'évaluation du rayon de protection diffère sensiblement si le récepteur selon l'invention fonctionne suivant la troisième ou la quatrième configuration, c'est à dire lorsque la position est déterminée à partir de pseudo-distances mesurées sur un signal mono-fréquence et rectifiée préalablement au moyen d'une correction différentielle. Dans ce cas en effet, la non-intégrité la plus pénalisante est causée par une panne d'un récepteur de référence plutôt que par une défaillance d'un satellite de la constellation. La figure 7 représente un schéma d'obtention des différents rayons de protection calculés dans le récepteur GPS pour un récepteur selon l'invention qui fonctionne suivant la troisième ou la quatrième configuration.

On se place dans une situation où un récepteur embarqué voit simultanément m satellites et M récepteurs au sol. Les M récepteurs sol sont relativement proches les uns des autres et appartiennent à une même station sol 40, leur position est connue précisément. La méthode d'évaluation du rayon de protection met en oeuvre un filtrage principal et M filtrages auxiliaires.

Le filtre principal fonctionne comme expliqué à la figure 6 mais il reçoit les corrections des M récepteurs au sol ; il utilise comme correction de chaque mesure de pseudo-distance par le code la moyenne arithmétique des corrections de code des M récepteurs ; il utilise comme correction de chaque mesure de pseudo-distance par la phase de porteuse la moyenne arithmétique des corrections de phase des M récepteurs.

Les canaux du récepteur envoient au filtre principal m premières mesures des pseudo-distances qui séparent le récepteur de chaque satellite. Ces m premières mesures sont réalisées grâce au code et sont nommées PD_C$_{ppal}$. m deuxièmes mesures des mêmes pseudo-distances, nommées PD_PH$_{ppal}$, sont réalisées cette fois au moyen de la phase de la porteuse.

Par ailleurs, chaque récepteur sol calcule m termes correctifs pour les mesures de pseudo-distance réalisées au moyen du code et m autres termes correctifs correspondant aux mesures de pseudo-distances réalisées grâce à la phase de la porteuse suivant la méthode décrite sur la figure 6. On bâtit à partir de ces données CorC$_{ppal}$, et CorPH$_{ppal}$ deux vecteurs comptant chacun m composantes. La ième composante de CorC$_{ppal}$ contient la moyenne arithmétique des M termes correctifs de la mesure de pseudo-distance séparant le satellite de rang i de chaque récepteur sol, mesures réalisée par le code. Parallèlement, la ième composante de CorPH$_{ppal}$ contient la moyenne arithmétique des M termes correctifs de la mesure de pseudo-distance séparant le satellite de rang i de chaque récepteur sol, ces mesures étant réalisées grâce à la phase de la porteuse. On alimente ainsi le filtre principal par 2.m mesures de pseudo-distance auxquelles sont retranchées des termes correctifs calculés à partir des corrections différentielles envoyées par les récepteurs de la station sol.

Simultanément le filtre principal reçoit les éphémérides des m satellites, les rapports signal à bruit des m réceptions de signaux sur le récepteur embarqué, ces données sont regroupées dans une matrice Data$_{ppal}$. A partir de ces données, le filtre principal détermine une position de récepteur G$_{ppal}$.

Chaque filtre auxiliaire fonctionne comme le filtre principal mais reçoit uniquement des corrections provenant de M-1 récepteurs au sol, le filtre de rang j ne recevant pas les corrections du récepteur sol de rang j. Les mesures de pseudo-distances alimentant le filtre principal alimentent également le filtre auxiliaire de rang j. Préalablement à leur entrée dans le filtre de Kalman auxiliaire de rang j, ces mesures sont corrigées par les composantes de CorC$_j$ (respectivement CorPH$_j$) qui sont les moyennes arithmétiques des corrections de M-1 récepteurs sol, plus précisément les corrections de toutes les mesures de code provenant de tous les récepteurs sol exceptée celle provenant du récepteur sol de rang j, pour chaque satellite (respectivement les M-1 corrections de mesure de phase de porteuse).

Le filtre auxiliaire de rang j reçoit également Data$_{ppal}$ et les rapports signal à bruit correspondant aux réceptions des signaux des m satellites sur les M-1 récepteurs au sol, soit (M-1).m rapport signal à bruit qui sont envoyés par la station sol en même temps que les corrections différentielles. Sur la figure 7, la variable (S/N_sol) regroupe les M.m rapport signal à bruit des m signaux des satellites sur les M récepteurs au sol. A partir de ces données, le filtre auxiliaire de rang j détermine une position de récepteur G$_j$ et des écarts-types qui sont des coefficients des matrices de covariances

$P_j$.

De manière similaire à la méthode d'évaluation du rayon de protection dans l'hypothèse $H_0$ d'absence de panne de satellite, on peut calculer un rayon de protection dans l'hypothèse $H_0$ d'absence de panne d'un récepteur au sol :

$$RP_{H0} = SUP_{j=1 \text{ à } M}[k_{PNI} \cdot \sigma_{ppal\,j}]$$

De manière similaire à la méthode d'évaluation du rayon de protection dans l'hypothèse $H_1$ d'une panne de satellite, on peut calculer un rayon de protection dans l'hypothèse $H_1$ d'une panne d'un récepteur au sol :

$$RP_{H1} = SUP_{j=1 \text{ à } M}[(d_j + k_{PND} \cdot \sigma_{aux\,j})]$$

Où :

$d_j$ est la distance entre l'erreur de position, par exemple d'altitude (composante du vecteur d'état X) donnée par le filtre principal et celle qui est donnée par le filtre auxiliaire de rang j.

$\sigma_{aux\,i,j}$ est la racine carrée de la variance de la mesure de position, par exemple d'altitude, du filtre auxiliaire de rang j, associé à la solution trouvée par ce filtre.

Au final pour prendre en compte les deux hypothèses avec et sans panne de satellite, le rayon de protection $RP_{HUL}$ vaut :

$$RP_{HUL} = SUP[\,RP_{H0}\,,\,RP_{H1}\,]$$

Il est possible de réaliser les calculs mis en oeuvre pour déterminer le rayon de protection dans la configuration différentielle plus simplement que par la méthode présentée ci-dessus. Ceci est possible en raison de la communalité des calculs réalisés par les m+1 filtres de Kalman nécessaires, qui obéissent tous à des équations identiques et ont un même gain **K**.

Considérons $Z_{ppal}$ le vecteur d'observations principales, ses m composantes sont égales à la moyenne arithmétique des M observations par les M récepteurs de référence. Rappelons que les observations sont les écarts entre les pseudo-distances mesurées et les pseudo-distances calculées à partir de la position estimée du récepteur et des positions connues des satellites.

On considère par ailleurs, $Z_{moy,\,j}$ le vecteur d'observations moyennes d'ordre j, ses m composantes sont composées de la moyenne arithmétique des M-1 observations par les récepteurs de référence, l'observation manquante correspond à celle du récepteur de référence de rang j.

On considère enfin $\Delta Z_i$ qui est un vecteur composé de la différence entre le vecteur d'observations principales et le vecteur d'observations moyennes $Z_{moy,\,j}$

Lorsqu'on alimente un filtre de Kalman, qui est le filtre de Kalman principal, par des observations composées de $\Delta Z_j$ on obtient comme vecteur position estimée résultant un vecteur noté dX. Les composantes de dX permettent d'accéder simplement aux distances $d_i$ entre les positions établies par les filtres auxiliaires et celle déterminée par le filtre principal. De cette façon on réalise le calcul du rayon de protection en calculant un unique filtre de Kalman (matrice de covariance P) et on gagne ainsi le temps nécessaire pour calculer les m autres filtres.

On a rappelé pour mémoire dans l'annexe ci-après les détails des vecteurs, matrices utilisés dans les différentes configurations envisagées dans la description qui précède.

### Annexe : matrices et vecteurs utilisés

m : nombre de satellites reçus ( $\leq$ N, : nombre de canaux. Les canaux du récepteur ne sont pas toujours tous occupés)

**A- Mode absolu mono-fréquence**

Modèle de propagation :

Position et temps :

$$X_{pvt} = \begin{bmatrix} dx \\ dy \\ dz \\ dt \end{bmatrix}_4 \qquad F_{pvt} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}_{4,4} \qquad Q_{pvt} = \begin{bmatrix} \infty & 0 & 0 & 0 \\ 0 & \infty & 0 & 0 \\ 0 & 0 & \infty & 0 \\ 0 & 0 & 0 & \infty \end{bmatrix}_{4,4}$$

Ambiguïté des phases de porteuse :

$$X_{amb} = \begin{bmatrix} b_{phase\ 1} \\ : \\ b_{phase\ m} \end{bmatrix}_m \qquad F_{amb} = \begin{bmatrix} & I_m & \end{bmatrix}_{m,m} \qquad Q_{amb} = \begin{bmatrix} & 0_m & \end{bmatrix}_{m,m}$$

Erreurs ionosphériques (exprimées en distance, en bande 1) :

$$X_{iono} = \begin{bmatrix} e_{iono\ 1} \\ : \\ e_{iono\ m} \end{bmatrix}_m \qquad F_{iono} = \begin{bmatrix} e^{-\tau_{iono}/\Delta T} & 0 & 0 \\ 0 & - & 0 \\ 0 & 0 & e^{-\tau_{iono}/\Delta T} \end{bmatrix}_{m,m} \qquad Q_{iono} = \begin{bmatrix} q_{iono\ 1} & 0 & 0 \\ 0 & . & 0 \\ 0 & 0 & q_{iono\ m} \end{bmatrix}_{m,m}$$

Erreurs troposphériques (exprimées en distance) :

$$X_{tropo} = \begin{bmatrix} e_{tropo\ 1} \\ : \\ e_{tropo\ m} \end{bmatrix}_m \qquad F_{tropo} = \begin{bmatrix} e^{-\tau_{tropo}/\Delta T} & 0 & 0 \\ 0 & - & 0 \\ 0 & 0 & e^{-\tau_{tropo}/\Delta T} \end{bmatrix}_{m,m} \qquad Q_{tropo} = \begin{bmatrix} q_{tropo\ 1} & 0 & 0 \\ 0 & . & 0 \\ 0 & 0 & q_{tropo\ m} \end{bmatrix}_{m,m}$$

Global:

$$X = \begin{bmatrix} X_{pvt} \\ X_{ambg} \\ X_{iono} \\ X_{tropo} \end{bmatrix}_{4+3m} \qquad F = \begin{bmatrix} F_{pvt} & 0 & 0 & 0 \\ 0 & F_{ambg} & 0 & 0 \\ 0 & 0 & F_{iono} & 0 \\ 0 & 0 & 0 & F_{tropo} \end{bmatrix}_{4+3m,4+3m}$$

$$Q = \begin{bmatrix} Q_{pvt} & 0 & 0 & 0 \\ 0 & Q_{ambg} & 0 & 0 \\ 0 & 0 & Q_{iono} & 0 \\ 0 & 0 & 0 & Q_{tropo} \end{bmatrix}_{4+3m,4+3m}$$

Modèle d'observation :

Observation de code :

$$Z_{code} = \begin{bmatrix} (PD\_C_1 - PDe_1) \\ : \\ (PD\_C_m - PDe_m) \end{bmatrix}_m \qquad R_{code} = \begin{bmatrix} \sigma^2{}_{code\ 1} & 0 & 0 \\ 0 & - & 0 \\ 0 & 0 & \sigma^2{}_{code\ 2} \end{bmatrix}_{m,m}$$

$$H_{code} = \begin{bmatrix} H_{pvt} & 0_m & I_m & I_m \end{bmatrix}_{m,4+3m}$$

Observation de porteuse :

$$Z_{porteuse} = \begin{bmatrix} (PD\_PH_1 - PDe_1) \\ : \\ (PD\_PH_m - PDe_m) \end{bmatrix}_m \qquad R_{porteuse} = \begin{bmatrix} \sigma^2{}_{porteuse\ 1} & 0 & 0 \\ 0 & - & 0 \\ 0 & 0 & \sigma^2{}_{porteuse\ m} \end{bmatrix}_{m,m}$$

$$\pm H_{porteuse} = \begin{bmatrix} H_{pvt} & I_m & -I_m & I_m \end{bmatrix}_{m,4+3m}$$

Global :

$$Z = \begin{bmatrix} Z_{code} \\ Z_{porteuse} \end{bmatrix}_{2m} \qquad R = \begin{bmatrix} R_{code} & 0 \\ 0 & R_{porteuse} \end{bmatrix}_{2m,2m} \qquad H = \begin{bmatrix} H_{code} \\ H_{porteuse} \end{bmatrix}_{2m,4+3m}$$

NB : $[\ ]_{u,v}$ signifie matrice de dimension u x v (soit u lignes et v colonnes)

**Définitions et notations :**

16

∞ : valeurs très grande devant les ordres de grandeur utilisés

$O_m$ : matrice nulle de dimension m.m

$I_m$ : matrice identité de dimension m.m

dx, dy, dz : erreurs sur la position estimée du récepteur en repère géographique,

dt : biais de temps de l'horloge du récepteur

$\Delta T$ : période d'échantillonnage (= $t_{n+1}$ -$t_n$)

$\tau_{iono}$ : période de corrélation de l'erreur ionosphérique,

$\tau_{tropo}$ : période de corrélation de l'erreur troposphérique,

$\sigma_{iono}$ : bruit de propagation du modèle markovien (du premier ordre) de l'erreur ionosphérique,

$\sigma_{tropo}$ : bruit de propagation du modèle markovien (du premier ordre) de l'erreur troposphérique.

$\sigma_{code}$ : Ecart-type de l'erreur de mesure de la phase du code

$\sigma_{porteuse}$ : Ecart-type de l'erreur de mesure de la phase de porteuse

$$\sigma_{code} = \frac{1}{\rho} \sqrt{\frac{B_{code}}{2S/N}\left(1 + \frac{B_{FI}}{S/N}\right)}$$

$$\sigma_{porteuse} = \frac{\lambda}{2\pi} \sqrt{\frac{B_{porteuse}}{S/N}\left(1 + \frac{B_{FI}}{2S/N}\right)}$$

$B_{code}$ : bande équivalente de bruit de la boucle de code (monolatérale)

$B_{porteuse}$ : bande équivalente de bruit de la boucle de porteuse (monolatérale)

$B_{FI}$ : bande de prédétection

$\rho$ : paramètre caractérisant la précision de la mesure du code en fonction de la modulation utilisée et de la bande passante du récepteur

**B- Mode absolu bi-fréquence (deuxième configuration du récepteur selon l'invention)**

Modèle de propagation:

Ambiguïté des phases de porteuse sur L1 :

$$X_{ambL1} = \begin{bmatrix} b_{phaseL1\ 1} \\ : \\ b_{phaseL1\ m} \end{bmatrix}_m \qquad F_{ambL1} = \begin{bmatrix} 1 & 0 & 0 \\ 0 & - & 0 \\ 0 & 0 & 1 \end{bmatrix}_{m,m} \qquad Q_{ambL1} = \begin{bmatrix} & & \\ & 0_m & \\ & & \end{bmatrix}_{m,m}$$

Ambiguïté des phases de porteuse sur L2 :

$$X_{ambL2} = \begin{bmatrix} b_{phaseL2\ 1} \\ : \\ b_{phaseL2\ m} \end{bmatrix}_m \qquad F_{ambL2} = \begin{bmatrix} 1 & 0 & 0 \\ 0 & - & 0 \\ 0 & 0 & 1 \end{bmatrix}_{m,m} \qquad Q_{ambL2} = \begin{bmatrix} & & \\ & 0_m & \\ & & \end{bmatrix}_{m,m}$$

Global:

$$X = \begin{bmatrix} X_{pvt} \\ X_{ambgL1} \\ X_{ambgL2} \\ X_{iono} \\ X_{tropo} \end{bmatrix}_{4+3m} \qquad F = \begin{bmatrix} F_{pvt} & 0 & 0 & 0 & 0 \\ 0 & F_{ambgL1} & 0 & 0 & 0 \\ 0 & 0 & F_{ambgL2} & 0 & 0 \\ 0 & 0 & 0 & F_{iono} & 0 \\ 0 & 0 & 0 & 0 & F_{tropo} \end{bmatrix}_{4+4m,4+4m}$$

$$Q = \begin{bmatrix} Q_{pvt} & 0 & 0 & 0 & 0 \\ 0 & Q_{ambL1} & 0 & 0 & 0 \\ 0 & 0 & Q_{ambL2} & 0 & 0 \\ 0 & 0 & 0 & Q_{iono} & 0 \\ 0 & 0 & 0 & 0 & Q_{tropo} \end{bmatrix}_{4+4m,4+4m}$$

Modèle d'observation :

Observation de code sur L1:

$$Z_{codeL1} = \begin{bmatrix} (PD\_C\_L1_1 - PDe_1) \\ : \\ (PD\_C\_L1_m - PDe_m) \end{bmatrix}_m \qquad R_{codeL1} = \begin{bmatrix} \sigma^2_{codeL1\ 1} & 0 & 0 \\ 0 & - & 0 \\ 0 & 0 & \sigma^2_{codeL1\ m} \end{bmatrix}_{m,m}$$

$$H_{codeL1} = \begin{bmatrix} H_{pvt} & 0_m & 0_m & I_m & I_m \end{bmatrix}_{m,4+3m}$$

Observation de porteuse sur L1:

$$Z_{porteuseL1} = \begin{bmatrix} (PD\_PH\_L1_1 - PDe_1) \\ : \\ (PD\_PH\_L1_m - PDe_m) \end{bmatrix}_m \qquad R_{porteuseL1} = \begin{bmatrix} \sigma^2_{porteuseL1\ 1} & 0 & 0 \\ 0 & - & 0 \\ 0 & 0 & \sigma^2_{porteuseL1\ m} \end{bmatrix}_{m,m}$$

$$H_{porteuseL1} = \begin{bmatrix} H_{pvt} & I_m & 0_m & -I_m & I_m \end{bmatrix}_{m,4+3m}$$

Observation de code sur L2:

$$Z_{codeL2} = \begin{bmatrix} (PD\_C\_L2_1 - PDe_1) \\ \vdots \\ (PD\_C\_L2_m - PDe_m) \end{bmatrix}_m \qquad R_{codeL2} = \begin{bmatrix} \sigma^2_{codeL2\ 1} & 0 & 0 \\ 0 & - & 0 \\ 0 & 0 & \sigma^2_{codeL2\ m} \end{bmatrix}_{m,m}$$

$$H_{codeL2} = \begin{bmatrix} H_{pvt} & 0_m & 0_m & \mu.I_m & I_m \end{bmatrix}_{m,4+4m}$$

Observation de porteuse sur L2:

$$Z_{porteuseL2} = \begin{bmatrix} (PD\_PH\_L2_1 - PDe_1) \\ \vdots \\ (PD\_PH\_L2_m - PDe_m) \end{bmatrix}_m \qquad R_{porteuseL2} = \begin{bmatrix} \sigma^2_{porteuseL2\ 1} & 0 & 0 \\ 0 & - & 0 \\ 0 & 0 & \sigma^2_{porteuseL2\ m} \end{bmatrix}_{m,m}$$

$$H_{porteuseL2} = \begin{bmatrix} H_{pvt} & 0_m & I_m & -\mu.I_m & I_m \end{bmatrix}_{m,4+4m}$$

Global:

$$Z = \begin{bmatrix} Z_{codeL1} \\ Z_{codeL2} \\ Z_{porteuseL1} \\ Z_{porteuseL2} \end{bmatrix}_{2m} \qquad R = \begin{bmatrix} R_{codeL1} & 0 & 0 & 0 \\ 0 & R_{codeL2} & 0 & 0 \\ 0 & 0 & R_{porteuseL1} & 0 \\ 0 & 0 & 0 & R_{porteuseL2} \end{bmatrix}_{2m,2m} \qquad H = \begin{bmatrix} H_{codeL1} \\ H_{codeL2} \\ H_{porteuseL1} \\ H_{porteuseL2} \end{bmatrix}_{2m,4+3}$$

**Définitions :**

$\mu$ : ratio des erreurs ionosphériques $L_2$ / $L_1$
$\mu$ = (fréquence $L_1$)$^2$ / (fréquence $L_2$)$^2$

**C- Mode absolu bi-fréquence avec correction amont (deuxième configuration du récepteur selon l'invention)**

Modèle de propagation :

Ambiguïté des phases de porteuse sur L1 :

$$X_{ambL1L2} = \begin{bmatrix} b_{phaseL1L21} \\ \vdots \\ b_{phaseL1L2\,m} \end{bmatrix}_m \qquad F_{ambL1L2} = \begin{bmatrix} 1 & 0 & 0 \\ 0 & - & 0 \\ 0 & 0 & 1 \end{bmatrix}_{m,m} \qquad Q_{ambL1L2} = \begin{bmatrix} & 0_m & \end{bmatrix}_{m,m}$$

Global :

$$X = \begin{bmatrix} X_{pvt} \\ X_{ambgL1L2} \\ X_{tropo} \end{bmatrix}_{4+2m} \qquad F = \begin{bmatrix} F_{pvt} & 0 & 0 \\ 0 & F_{ambgL1L2} & 0 \\ 0 & 0 & F_{tropo} \end{bmatrix}_{4+2m,\,4+2m}$$

$$Q = \begin{bmatrix} Q_{pvt} & 0 & 0 \\ 0 & Q_{ambL1L2} & 0 \\ 0 & 0 & Q_{tropo} \end{bmatrix}_{4+2m,\,4+2m}$$

Modèle d'observation :

Observation de code sur L1 L2:

$$Z_{codeL1L2} = \begin{bmatrix} (PD\_C\_L1L2_1 - PDe_1) \\ \vdots \\ (PD\_C\_L1L2_m - PDe_m) \end{bmatrix}_m \qquad R_{codeL1L2} = \begin{bmatrix} \sigma^2_{codeL1L2\,1} & 0 & 0 \\ 0 & - & 0 \\ 0 & 0 & \sigma^2_{codeL1L2\,m} \end{bmatrix}_{m,m}$$

$$H_{codeL1L2} = \begin{bmatrix} H_{pvt} & 0_m & I_m \end{bmatrix}_{m,\,4+2m}$$

Observation de porteuse sur L1 L2 :

$$Z_{porteuseL1L2} = \begin{bmatrix} (PD\_PH\_L1L2_1 - PDe_1) \\ \vdots \\ (PD\_PH\_L1L2_m - PDe_m) \end{bmatrix}_m$$

$$R_{porteuseL1L2} = \begin{bmatrix} \sigma^2_{porteuseL1L2\ 1} & 0 & 0 \\ 0 & - & 0 \\ 0 & 0 & \sigma^2_{porteuseL1L2\ m} \end{bmatrix}_{m,m}$$

$$H_{porteuseL1L2} = \begin{bmatrix} H_{pvt} & I_m & I_m \end{bmatrix}_{m,4+2m}$$

Global :

$$Z = \begin{bmatrix} Z_{codeL1L2} \\ Z_{porteuseL1L2} \end{bmatrix}_{2m} \qquad R = \begin{bmatrix} R_{codeL1L2} & 0 \\ 0 & R_{porteuseL1L2} \end{bmatrix}_{2m,2m}$$

$$H = \begin{bmatrix} H_{codeL1L2} \\ H_{porteuseL1L2} \end{bmatrix}_{2m,4+2m}$$

**Définitions :**

$$PD\_C\_L1L2 \quad = \quad \left(\frac{1}{\mu-1}\right)PD\_C\_L2 \quad + \quad \left(\frac{\mu}{\mu-1}\right)PD\_C\_L1$$

$$PD\_PH\_L1L2 \quad = \quad \left(\frac{1}{\mu-1}\right)PD\_PH\_L2 \quad + \quad \left(\frac{\mu}{\mu-1}\right)PD\_PH\_L1$$

**D- Mode différentiel mono-fréquence (troisième et quatrième configuration du récepteur selon l'invention)**

Modèle de propagation :

Ambiguïté des phases de porteuse :

$$X_{amb} = \begin{bmatrix} b_{phase\ 1} \\ : \\ b_{phase\ m} \end{bmatrix}_m \qquad F_{amb} = \begin{bmatrix} I_m \\ & 1 \end{bmatrix}_{m,m} \qquad Q_{amb} = \begin{bmatrix} 0_m \end{bmatrix}_{m,m}$$

Global :

$$X = \begin{bmatrix} X_{pvt} \\ X_{amb} \end{bmatrix}_{4+m} \qquad F = \begin{bmatrix} F_{pvt} & 0 \\ 0 & F_{amb} \end{bmatrix}_{4+m,4+m} \qquad Q = \begin{bmatrix} Q_{pvt} & 0 \\ 0 & Q_{amb} \end{bmatrix}_{4+m,4+m}$$

<u>Modèle d'observation :</u>

Observation de code :

$$Z_{code} = \begin{bmatrix} (PD\_C_1 - PD e_1) - CC_1 \\ : \\ (PD\_C_m - PD e_m) - CC_m \end{bmatrix}_m \qquad R_{code} = \begin{bmatrix} \sigma^2_{code\,1} & 0 & 0 \\ 0 & - & 0 \\ 0 & 0 & \sigma^2_{code\,2} \end{bmatrix}_{m,m}$$

$$H_{code} = \begin{bmatrix} H_{pvt} & 0_m \end{bmatrix}_{m,4+m} \qquad H_{pvt} = \begin{bmatrix} \cos(\alpha_1) & \cos(\beta_1) & \cos(\gamma_1) & 1 \\ : & : & : & : \\ \cos(\alpha_m) & \cos(\beta_m) & \cos(\gamma_m) & 1 \end{bmatrix}_{m,4}$$

Observation de porteuse :

$$Z_{porteuse} = \begin{bmatrix} (PD\_PH_1 - PD e_1) - CPH_1 \\ : \\ (PD\_PH_m - PD e_m) - CPH_m \end{bmatrix}_m \qquad R_{porteuse} = \begin{bmatrix} \sigma^2_{porteuse\,1} & 0 & 0 \\ 0 & - & 0 \\ 0 & 0 & \sigma^2_{porteuse\,m} \end{bmatrix}_{m,m}$$

$$H_{porteuse} = \begin{bmatrix} H_{pvt} & I_m \end{bmatrix}_{m,4+m}$$

Global :

$$Z = \begin{bmatrix} Z_{code} \\ Z_{porteuse} \end{bmatrix}_{2m} \qquad R = \begin{bmatrix} R_{code} & 0 \\ 0 & R_{porteuse} \end{bmatrix}_{2m,2m} \qquad H = \begin{bmatrix} H_{code} \\ H_{porteuse} \end{bmatrix}_{2m,4+m}$$

<u>**Définitions :**</u>

$\cos(\alpha_i)$ , $\cos(\beta_i)$ , $\cos(\gamma_i)$ : cosinus directeur de l'axe récepteur-satellite i (ou axes à vue) en repère géographique

$\alpha_{code\ i}$ : écart-type de l'erreur de mesure de la phase de code propre au récepteur (bruit thermique + aux multi-trajet)*

$\sigma_{porteuse\ i}$: écart-type de l'erreur de mesure de la phase de porteuse propre au récepteur (bruit thermique + multi-trajet)*

(*) en mode différentiel, il faut prendre en compte les erreur sur les corrections différentielles. Pour cela on prend :

$$(\sigma_{code})^2 = (\sigma_{code\ récepteur\ mobile})^2 + (\sigma_{code\ récepteur\ référence})^2$$

$$(\sigma_{porteuse})^2 = (\sigma_{porteuse\ récepteur\ mobile})^2 + (\sigma_{porteuse\ récepteur\ référence})^2$$

## E- Application de la correction de position

$$X_{n/n} = \begin{bmatrix} dL \\ dG \\ dh \\ dt \\ X_{ambg} \\ X_{iono} \\ X_{tropo} \end{bmatrix}_{4+3m} \quad Cor_n = \begin{bmatrix} dL \\ dG \\ dh \end{bmatrix}_3 \quad X_{n/n\ corrigé} = \begin{bmatrix} 0 \\ 0 \\ 0 \\ dt \\ X_{ambg} \\ X_{iono} \\ X_{tropo} \end{bmatrix}_{4+3m}$$

## F- Hybridation GNSS/INS

Modèle de propagation :

Erreurs inertielles :

$$X_{inertie} = \begin{bmatrix} dL \\ dG \\ dh \\ dVn \\ dVe \\ dVv \\ d\theta n \\ d\theta e \\ d\theta v \\ b_{acc}x \\ b_{acc}y \\ b_{acc}z \\ b_{gyr}z \\ b_{gyr}x \\ b_{gyr}y \\ b_{gyr}z \end{bmatrix}_{15} \qquad F_{INS} = \begin{bmatrix} F_{inertie} \end{bmatrix}_{15,15} \qquad Q_{pvt} = \begin{bmatrix} Q_{inertie} \end{bmatrix}_{15,15}$$

Position et temps :

$$X_{pvt} = \begin{bmatrix} X_{inertie} \\ dt \end{bmatrix}_{4} \qquad F_{pvt} = \begin{bmatrix} F_{inertie} & 0 \\ 0 & 1 \end{bmatrix}_{4,4} \qquad Q_{pvt} = \begin{bmatrix} Q_{inertie} & 0 \\ 0 & q_{hor\log e} \end{bmatrix}_{4,4}$$

**Définitions :**

dL, dG, dh : erreurs sur la position estimée en latitude, longitude, altitude dVn, dVe, dVv : erreurs sur la vitesse estimée en axes Nord, Est, Vertical d$\theta$n, d$\theta$e, d$\theta$v : erreurs sur l'attitude du porteurs estimée selon les axes Nord, Est, Vertical
$b_{acc}x$, $b_{acc}y$, $b_{acc}y$ : biais des accéléromètres en axe porteur
$d_{gyr}x$, $d_{gyr}y$, $d_{gyr}y$ : dérives des gyromètres en axe porteur

La matrice de propagation $F_{inertie}$ et de covariance du bruit de propagation $Q_{inertie}$ sont dérivées à partir des caractéristiques des capteurs inertielles et de l'algorithme d'intégration produisant les attitudes, vitesse et position inertielles, selon l'état de l'art des hybridation inertie GPS avec filtre de Kalman.

**G - Initialisation du filtre au début**

Vecteur d'état :

$$X_0 = \begin{bmatrix} & 0_{4+3m} & \end{bmatrix}_{4+3m,4+3m}$$

Matrice de covariance de l'état :

$$P_{0_{pvt}} = \begin{bmatrix} \infty & 0 & 0 & 0 \\ 0 & \infty & 0 & 0 \\ 0 & 0 & \infty & 0 \\ 0 & 0 & 0 & \infty \end{bmatrix}_{4,4} \qquad P_{0_{amb}} = \begin{bmatrix} \infty & 0 & 0 \\ 0 & \infty & 0 \\ 0 & 0 & \infty \end{bmatrix}_{m,m}$$

$$P_{0_{iono}} = \begin{bmatrix} \sigma_{iono\ 1}^2 & 0 & 0 \\ 0 & . & 0 \\ 0 & 0 & \sigma_{iono\ m}^2 \end{bmatrix}_{m,m} \qquad P_{0_{tropo}} = \begin{bmatrix} \sigma_{tropo\ 1}^2 & 0 & 0 \\ 0 & . & 0 \\ 0 & 0 & \sigma_{tropo\ m}^2 \end{bmatrix}_{m,m}$$

$$P_0 = \begin{bmatrix} P_{0_{pvt}} & 0 & 0 & 0 \\ 0 & P_{0_{ambg}} & 0 & 0 \\ 0 & 0 & P_{0_{iono}} & 0 \\ 0 & 0 & 0 & P_{0_{tropo}} \end{bmatrix}_{4+3m,4+3m}$$

**Définitions :**

$\sigma_{iono\ i}$ :écart-type de l'erreur ionosphérique sur l'axe à vue du satellite i
$\sigma_{tropo\ i}$ : écart-type de l'erreur troposphérique sur l'axe à vue du satellite i

Ces valeurs sont données par des modèles de l'atmosphère, en fonction de l'inclinaison de l'axe satellite, de la latitude du récepteur, et de l'heure du jour.

**H - Apparition et disparition des satellites**

Disparition d'un satellite

Dans le cas d'une disparition définitive d'un satellite due par exemple au masquage par la terre. Le nombre de satellite m diminue de 1, et tous les termes relatifs à l'ambiguïté des phases de porteuse, à l'erreur ionosphérique et à l'erreur troposphérique concernant le satellite disparu sont supprimés du vecteur X et des matrices P, F et Q (y compris les coefficients non diagonaux d'intercorrélation avec les autres satellites). Les deux lignes et les trois (ou quatre) colonnes de la matrice H associées au satellite disparu sont aussi supprimées (de même que disparaissent les observations de code et de porteuse dans le vecteur Z).

Dans le cas d'une disparition provisoire d'un satellite due par exemple au masquage par un obstacle, au mouvement du porteur ou à une interférence, tous les termes sont conservés sauf les deux lignes et les trois (ou quatre) colonnes de la matrice H associées au satellite disparu qui sont provisoirement supprimées de même que les observations dans le vecteur Z.

Apparition d'un satellite

Dans le cas d'une réapparition d'un satellite, les deux lignes et les trois (ou quatre) colonnes de la matrice H associées au nouveau satellite sont rétablies (de même qu'apparaissent à nouveaux les observations de code et de porteuse dans le vecteur Z). Le terme d'ambiguïté de phase du vecteur X est réinitialisé à 0. Le coefficient diagonal associé à l'ambiguïté de phase dans la matrice P est réinitialisé à ∞, c'est à dire une valeur très grande devant les ordres de grandeur couramment utilisés. Dans la matrice P, le nouveau coefficient diagonal associé à l'erreur troposphérique dans la matrice P est initialisé à $\sigma^2_{tropo\ i}$ et le nouveau coefficients diagonal associé à l'erreur ionosphérique dans la matrice P est initialisé à $\sigma^2_{iono\ i}$ Les coefficients non diagonaux associés à l'ambiguïté de phase sont initialisés à 0.

Dans le cas d'une apparition d'un nouveau satellite. Le nombre m de satellites vus augmente de 1. Un nouveau terme d'ambiguïté de phase du vecteur X est initialisé à 0. Un nouveau coefficient diagonal associé à l'ambiguïté de phase dans la matrice P est initialisé à ∞. Des nouveaux coefficients non diagonaux associés à l'ambiguïté de phase dans la matrice P sont initialisés à 0. Des termes relatifs à l'erreur ionosphérique et à l'erreur troposphérique du nouveau satellite sont ajoutés dans les matrices F et Q. Les deux lignes et les trois (ou quatre) colonnes de la matrice H associées au nouveau satellite sont ajoutées (de même qu'apparaissent les observations de code et de porteuse dans le vecteur Z).

**Revendications**

1. Récepteur de positionnement par satellite, comprenant plusieurs canaux de traitement numérique de signal ($C_i$) destinés à être associés chacun à un satellite respectif et fournissant chacun une première donnée numérique ($PD\_C_i$) représentant une pseudo-distance entre le récepteur et le satellite calculée à partir d'une phase instantanée d'un code pseudo-aléatoire présent dans le signal émis par le satellite et une deuxième donnée numérique ($PD\_PH_i$) représentant cette pseudo-distance calculée à partir d'une phase instantanée de la porteuse du signal émis par le satellite, comportant un filtre de Kalman étendu comportant :

   - des moyens de calcul d'une position du récepteur dans un repère terrestre à partir d'une position précédemment calculée et d'une erreur sur cette position ;
   - des moyens de calcul de propagation d'un vecteur d'état estimé comprenant notamment l'erreur sur la position calculée du récepteur, à partir d'une équation de propagation matricielle faisant intervenir une matrice de propagation,
   - des moyens de calcul de recalage du vecteur d'état à partir d'observations relatives à chaque satellite et d'une matrice d'observations liant le vecteur d'état et les observations,
   - des moyens de calcul d'observations, recevant d'une part la première et la deuxième donnée numérique et d'autre part une pseudo-distance estimée calculée entre le récepteur et chaque satellite, pour établir des observations à appliquer à l'entrée des moyens de calcul de recalage, et
   - des moyens pour calculer une pseudo-distance estimée pour chaque satellite, par calcul de la distance entre la position calculée du récepteur dans le repère terrestre et chaque satellite,
   **caractérisé en ce que**:
   - les moyens de calcul d'observations sont adaptés pour utiliser un vecteur d'observations comprenant une composante égale à la différence entre la première donnée numérique ($PD\_C_i$) et ladite pseudo-distance estimée, et une composante égale à la différence entre la deuxième donnée numérique ($PD\_PH_i$) et ladite pseudo-distance estimée, par satellite, et
   - les moyens de calcul de propagation sont adaptés pour faire intervenir, dans l'équation de propagation matricielle, le vecteur d'état comprenant une composante représentant l'ambiguïté de la mesure de la pseudo-distance de porteuse, par satellite.

2. Récepteur selon la revendication. 1, **caractérisé en ce que** l'équation de propagation matricielle fait intervenir dans le vecteur d'état une composante représentant une erreur liée à la propagation du signal dans l'ionosphère, par satellite.

3. Récepteur selon la revendication 1 ou 2, **caractérisé en ce que** l'équation de propagation matricielle fait intervenir dans le vecteur d'état au moins une composante représentant une erreur liée à la propagation de la porteuse dans la troposphère, par satellite.

4. Récepteur selon l'une des revendications 1 à 3, **caractérisé en ce que** chaque canal ($C_i$) associé à un satellite comprend deux sous-canaux ($SCL1_i$), ($SCL2_i$) recevant de ce satellite des signaux à fréquence de porteuse différentes, les sous-canaux produisant des pseudo-distances instantanées respectives et la première et la deuxième données numériques étant des combinaisons linéaires de ces pseudo-distances.

5. Récepteur selon l'une des revendications 1 à 3, **caractérisé en ce que** chaque canal ($C_i$) associé à un satellite comprend deux sous-canaux ($SCL1_i$), ($SCL2_i$) recevant de ce satellite des signaux à fréquence de porteuse différentes, chacun des sous-canaux ($SCL1_i$), ($SCL2_i$) produisant des pseudo-distances instantanées respectives qui sont toutes appliquées, sous forme de première et deuxième données numériques respectivement, à l'entrée des moyens de calcul d'observations.

6. Récepteur selon l'une des revendications 1 à 5, **caractérisé en ce que** le filtre de Kalman constitue un filtre principal fournissant une position calculée dans le repère terrestre à partir d'observations faites sur m satellites identifiés par leur rang i (i entier de 1 à m), et **en ce que** le récepteur comporte par ailleurs m filtres de Kalman auxiliaires de rang i, un filtre auxiliaire de rang i recevant les signaux de tous les satellites à l'exception du satellite de rang i.

7. Récepteur selon la revendication 6, **caractérisé en ce qu'**il comporte des moyens de calcul d'un rayon de protection à partir des sorties des différents filtres de Kalman et des moyens de vérification que ce rayon de protection n'excède pas un seuil déterminé.

8. Récepteur selon l'une des revendications 1 à 5, **caractérisé en ce que** chaque canal de traitement numérique associé à un satellite et traitant les signaux émis par ce satellite reçoit en outre d'un récepteur de positionnement de référence placé dans une station au sol, une première correction de phase de code et une deuxième correction de phase de porteuse relatives à ce satellite, pour élaborer respectivement la première et la deuxième données numériques en tenant compte de ces corrections.

9. Récepteur selon l'une des revendications 1 à 5 pour une mesure de position relative, **caractérisé en ce que** chaque canal de traitement numérique associé à un satellite et traitant les signaux émis par ce satellite reçoit en outre d'un récepteur de positionnement de référence mobile une correction constituée d'une pseudo-distance mesurée entre le satellite et le récepteur de positionnement de référence, pour élaborer respectivement la première et la deuxième donnée numérique par différences des pseudo-distances et **en ce que** l'information délivrée par le récepteur est une position relative par rapport au récepteur de référence mobile.

10. Récepteur selon l'une des revendications 8 ou 9, **caractérisé en ce qu'**il comporte, outre le filtre de Kalman mentionné en premier et appelé filtre principal, M autres filtres de Kalman dits filtres auxiliaires de rang j, j entier variant de 1 à M, et M supérieur à 1, et **en ce que** chaque canal de traitement numérique reçoit des corrections de M récepteurs de référence, et calcule :

- d'une part une moyenne des M premières corrections et une moyenne des M deuxièmes corrections, ces moyennes servant de termes correctifs pour élaborer les première et deuxième données numériques pour le filtre principal
- d'autre part, pour chaque rang j, une moyenne de M-1 premières corrections et une moyenne de M-1 deuxièmes corrections, excluant les corrections issues du récepteur de rang j, ces moyennes servant de termes correctifs pour élaborer les première et deuxième données numériques pour le filtre de rang j.

11. Récepteur selon la revendication 10, **caractérisé en ce qu'**il comporte des moyens de calcul d'un rayon de protection à partir des sorties des différents filtres de Kalman et des moyens de vérification que ce rayon de protection n'excède pas un seuil déterminé.

12. Récepteur selon l'une des revendications 8 ou 9, **caractérisé en ce qu'**il comporte des moyens de calcul d'un rayon de protection à partir des sorties d'un unique filtre de Kalman alimenté par M observations composées des différences entre un vecteur d'observations principales dont les m composantes sont égales à la moyenne arithmétique des M observations par les M récepteurs de référence et les M vecteurs d'observations moyennes dont les m composantes sont égales à la moyenne arithmétique de M-1 observations par les récepteurs de référence, et des moyens de vérification que ce rayon de protection n'excède pas un seuil déterminé.

**Patentansprüche**

1. Satellitenortungsempfänger, der mehrere digitale Signalverarbeitungskanäle ($C_i$) aufweist, die dazu bestimmt sind, je einem Satellit zugeordnet zu werden und je einen ersten eine Pseudoentfernung zwischen dem Empfänger und dem Satellit darstellenden digitalen Datenwert (PD_$C_i$), der ausgehend von einer augenblicklichen Phase eines pseudozufälligen Codes, der in dem vom Satellit gesendeten Signal enthalten ist, berechnet wird, und einen zweiten diese Pseudoentfernung darstellenden digitalen Datenwert (PD_$PH_i$) liefern, der ausgehend von einer augenblicklichen Phase der Trägerwelle des vom Satelliten gesendeten Signals berechnet wird, **aufweisend** ein erweitertes Kalman-Filter, das aufweist:

   - Mittel zur Berechnung einer Position des Empfängers in einem terrestrischen Bezugssystem ausgehend von einer vorher berechneten Position und von einem Fehler bezüglich dieser Position;
   - Mittel zur Berechnung der Ausbreitung eines geschätzten Zustandsvektors, der insbesondere den Fehler bezüglich der berechneten Position des Empfängers enthält, ausgehend von einer Matrix-Ausbreitungsgleichung, die eine Ausbreitungsmatrix verwendet,
   - Mittel zur Berechnung der Neueinstellung des Zustandsvektors ausgehend von jeden Satelliten betreffenden Beobachtungen und von einer Beobachtungsmatrix, die den Zustandsvektor und die Beobachtungen verbindet,
   - Mittel zur Berechnung von Beobachtungen, die einerseits den ersten und den zweiten Datenwert und andererseits eine geschätzte Pseudoentfernung empfangen, die zwischen dem Empfänger und jedem Satelliten berechnet wird, um Beobachtungen zu erstellen, die an den Eingang der Mittel zur Neueinstellungsberechnung anzuwenden sind, und
   - Mittel zur Berechnung einer geschätzten Pseudoentfernung für jeden Satelliten durch Berechnung der Entfernung zwischen der berechneten Position des Empfängers im terrestrischen Bezugssystem und jedem Satelliten,

   **dadurch gekennzeichnet, dass**:
   - die Mittel zur Berechnung von Beobachtungen angepasst sind, um einen Vektor für Beobachtungen zu benutzen, der pro Satellit eine Komponente umfasst, die gleich der Differenz zwischen dem ersten digitalen Datenwert (PD_$C_i$) und der geschätzten Pseudoentfernung ist, und eine Komponente, die gleich der Differenz zwischen dem zweiten digitalen Datenwert (PD_$PH_i$) und der geschätzten Pseudoentfernung ist, zu verwenden, und
   - die Mittel zur Berechnung der Ausbreitung angepasst sind, um den Zustandsvektor in der Matrix-Ausbreitungsgleichung zu verwenden, umfassend eine Komponente, die die Ambiguität der Messung der Pseudoentfernung der Trägerwelle pro Satellit darstellt.

2. Empfänger nach Anspruch 1, **dadurch gekennzeichnet, dass** die Matrix-Ausbreitungsgleichung im Zustandsvektor pro Satellit eine Komponente verwendet, die einen mit der Ausbreitung des Signals in der Ionosphäre verbundenen Fehler darstellt.

3. Empfänger nach Anspruch 1 oder 2, **dadurch gekennzeichnet, dass** die Matrix-Ausbreitungsgleichung im Zustandsvektor pro Satellit mindestens eine Komponente verwendet, die einen mit der Ausbreitung der Trägerwelle in der Troposphäre verbundenen Fehler darstellt.

4. Empfänger nach einem der Ansprüche 1 bis 3, **dadurch gekennzeichnet, dass** jeder einem Satellit zugeordnete Kanal ($C_i$) zwei Unterkanäle ($SCL1_i$), ($SCL2_i$) aufweist, die von diesem Satelliten Signale mit unterschiedlichen Trägerfrequenzen empfangen, wobei die Unterkanäle jeweilige augenblickliche Pseudoentfernungen erzeugen und der erste und der zweite digitale Datenwert lineare Kombinationen dieser Pseudoentfernungen sind.

5. Empfänger nach einem der Ansprüche 1 bis 3, **dadurch gekennzeichnet, dass** jeder einem Satellit zugeordnete Kanal ($C_i$) zwei Unterkanäle ($SCL1_i$), ($SCL2_i$) aufweist, die von diesem Satelliten Signale mit unterschiedlichen Trägerfrequenzen empfangen, wobei jeder der Unterkanäle ($SCL1_i$), ($SCL2_i$) jeweilige augenblickliche Pseudoentfernungen erzeugt, die alle in Form eines ersten bzw. zweiten Datenwerts an den Eingang der Mittel zur Berechnung von Beobachtungen angewendet werden.

6. Empfänger nach einem der Ansprüche 1 bis 5, **dadurch gekennzeichnet, dass** das Kalman-Filter ein Hauptfilter bildet, das eine berechnete Position im terrestrischen Bezugssystem ausgehend von Beobachtungen liefert, die auf m Satelliten gemacht werden, die durch ihren Rang i identifiziert werden (i eine ganze Zahl von 1 bis m), und dass der Empfänger außerdem m Kalman-Hilfsfilter des Rangs i aufweist, wobei ein Hilfsfilter des Rangs i die Signale aller Satelliten mit Ausnahme des Satelliten des Rangs i empfängt.

**7.** Empfänger nach Anspruch 6, **dadurch gekennzeichnet, dass** er Mittel zur Berechnung eines Schutzradius ausgehend von den Ausgangssignalen der verschiedenen Kalman-Filter und Mittel zur Überprüfung aufweist, dass dieser Schutzradius eine bestimmte Schwelle nicht überschreitet.

**8.** Empfänger nach einem der Ansprüche 1 bis 5, **dadurch gekennzeichnet, dass** jeder digitale Verarbeitungskanal, der einem Satellit zugeordnet ist und die von diesem Satelliten gesendeten Signale verarbeitet, außerdem von einem in einer Bodenstation angeordneten Referenzortungsempfänger eine erste Codephasenkorrektur und eine zweite Trägerwellenphasenkorrektur bezüglich dieses Satelliten empfängt, um den ersten bzw. den zweiten digitalen Datenwert unter Berücksichtigung dieser Korrekturen zu erarbeiten.

**9.** Empfänger nach einem der Ansprüche 1 bis 5 für eine relative Positionsmessung, **dadurch gekennzeichnet, dass** jeder einem Satelliten zugeordnete und die von diesem Satelliten gesendeten Signale verarbeitende digitale Verarbeitungskanal außerdem von einem mobilen Referenzortungsempfänger eine Korrektur empfängt, die aus einer zwischen dem Satelliten und dem Referenzortungsempfänger gemessenen Pseudoentfernung besteht, um den ersten bzw. den zweiten digitalen Datenwert durch Differenzen der Pseudoentfernungen zu erarbeiten, und dass die vom Empfänger gelieferte Information eine relative Position bezüglich des mobilen Referenzempfängers ist.

**10.** Empfänger nach einem der Ansprüche 8 oder 9, **dadurch gekennzeichnet, dass** er außer dem als erstes erwähnten und Hauptfilter genannten Kalman-Filter M weitere Hilfsfilter des Rangs j genannte Kalman-Filter aufweist, wobei j eine ganze Zahl ist, die von 1 bis M variiert, und wobei M größer als 1 ist, und dass jeder digitale Verarbeitungskanal Korrekturen von M Referenzempfängern empfängt und berechnet:

- einerseits einen Mittelwert der M ersten Korrekturen und einen Mittelwert der M zweiten Korrekturen, wobei diese Mittelwerte als Korrekturterme dienen, um den ersten und den zweiten digitalen Datenwert für das Hauptfilter zu erarbeiten,
- andererseits für jeden Rang j einen Mittelwert von M-1 ersten Korrekturen und einen Mittelwert von M-1 zweiten Korrekturen, ausschließlich der vom Empfänger des Rangs j stammenden Korrekturen, wobei diese Mittelwerte als Korrekturterme dienen, um den ersten und den zweiten digitalen Datenwert für das Filter des Rangs j zu erarbeiten.

**11.** Empfänger nach Anspruch 10, **dadurch gekennzeichnet, dass** er Mittel zur Berechnung eines Schutzradius ausgehend von den Ausgangssignalen der verschiedenen Kalman-Filter und Mittel zur Überprüfung aufweist, dass dieser Schutzradius eine bestimmte Schwelle nicht überschreitet.

**12.** Empfänger nach einem der Ansprüche 8 oder 9, **dadurch gekennzeichnet, dass** er Mittel zur Berechnung eines Schutzradius ausgehend von den Ausgangssignalen eines einzigen Kalman-Filters, das mit M Beobachtungen gespeist wird, die aus den Differenzen zwischen einem Vektor von Hauptbeobachtungen, dessen m Komponenten gleich dem arithmetischen Mittelwert der M Beobachtungen durch die M Referenzempfänger sind, und den M Vektoren von mittleren Beobachtungen bestehen, deren m Komponenten gleich dem arithmetischen Mittelwert von M-1 Beobachtungen durch die Referenzempfänger sind, und Mittel zur Überprüfung aufweist, dass dieser Schutzradius eine bestimmte Schwelle nicht überschreitet.

**Claims**

**1.** Satellite positioning receiver, comprising several digital signal processing channels ($C_i$) each designed to be associated with a respective satellite and each supplying a first digital datum ($PD\_C_i$) representing a pseudo-distance between the receiver and the satellite computed on the basis of an instantaneous phase of a pseudo-random code present in the signal transmitted by the satellite and a second digital datum ($PD\_PH_i$) representing this pseudo-distance computed on the basis of an instantaneous phase of the carrier of the signal transmitted by the satellite, **comprising** an extended Kalman filter comprising:

- means for computing a position of the receiver in a terrestrial fix based on a previously computed position and on an error on this position;
- means for computing propagation of an estimated status vector comprising notably the error on the computed position of the receiver, based on a matrix propagation equation involving a propagation matrix,
- means for computing the retiming of the status vector based on observations relative to each satellite and on an observations matrix linking the status vector and the observations,

- means for computing observations, receiving on the one hand the first and the second digital datum and on the other hand an estimated pseudo-distance computed between the receiver and each satellite, in order to establish observations to be applied to the input of the retiming computation means, and

- means for computing an estimated pseudo-distance for each satellite, by computing the distance between the computed position of the receiver in the terrestrial fix and each satellite,

**characterised in that**:

- the means for computing observations are adapted for using a vector of observations comprising a component which is equal to the difference between the first digital data (PD_C$_i$) and said estimated pseudo-distance, and a component which is equal to the difference between the second digital data (PD_PH$_i$) and said estimated pseudo-distance, by satellite, and

- the means for computing propagation are adapted to involve in the matrix propagation equation the status vector comprising a component representing the ambiguity of the measure of the carrier pseudo-distance measurement, by satellite.

2. Receiver according to Claims 1, **characterized in that** the matrix propagation equation involves in the status vector a component representing an error linked to the propagation of the signal in the ionosphere, by satellite.

3. Receiver according to Claims 1 or 2, **characterized in that** the matrix propagation equation involves in the status vector at least one component representing an error linked to the propagation of the carrier in the troposphere, by satellite.

4. Receiver according to one of Claims 1 to 3, **characterized in that** each channel (C$_i$) associated with a satellite comprises two sub-channels (SCL1$_i$), (SCL2$_i$) receiving from this satellite signals at different carrier frequencies, the sub-channels producing respective instantaneous pseudo-distances and the first and second digital data being linear combinations of these pseudo-distances.

5. Receiver according to one of Claims 1 to 3, **characterized in that** each channel (C$_i$) associated with a satellite comprises two sub-channels (SCL1$_i$), (SCL2$_i$) receiving from this satellite signals at different carrier frequencies, each of the sub-channels (SCL1$_i$), (SCL2$_i$) producing respective instantaneous pseudo-distances that are all applied, in the form of first and second digital data respectively, to the input of the observations computation means.

6. Receiver according to one of Claims 1 to 5, **characterized in that** the Kalman filter constitutes a main filter supplying a computed position in the terrestrial fix based on observations made on m satellites identified by their rank i (i being an integer from 1 to m), and **in that** the receiver furthermore comprises m auxiliary Kalman filters of rank i, an auxiliary filter of rank i receiving the signals from all of the satellites except for the satellite of rank i.

7. Receiver according to Claim 6, **characterized in that** it comprises means for computing a radius of protection based on the outputs of the various Kalman filters and means for verifying that this radius of protection does not exceed a determined threshold.

8. Receiver according to one of Claims 1 to 5, **characterized in that** each digital processing channel associated with a satellite and processing the signals transmitted by this satellite also receives from a reference positioning receiver placed in a ground station, a first code phase correction and a second carrier phase correction relative to this satellite, in order to generate respectively the first and second digital data taking account of these corrections.

9. Receiver according to one of Claims 1 to 5 for a relative position measurement, **characterized in that** each digital processing channel associated with a satellite and processing the signals transmitted by this satellite also receives from a mobile reference positioning receiver a correction consisting of a pseudo-distance measured between the satellite and the reference positioning receiver, in order to generate respectively the first and second digital data by differences of the pseudo-distances and **in that** the information delivered by the receiver is a relative position relative to the mobile reference receiver.

10. Receiver according to one of Claims 8 or 9, **characterized in that** it comprises, in addition to the Kalman filter mentioned initially and called the main filter, M other Kalman filters called auxiliary filters of rank j, j being an integer varying from 1 to M, and M being greater than 1, and **in that** each digital processing channel receives corrections from M reference receivers, and computes:

- on the one hand a mean of the first M corrections and a mean of the second M corrections, these means serving as corrective terms in order to generate the first and second digital data for the main filter,
- on the other hand, for each rank j, a mean of M-1 first corrections and a mean of M-1 second corrections, excluding the corrections originating from the receiver of rank j, these means serving as corrective terms in order to generate the first and second digital data for the filter of rank j.

11. Receiver according to Claim 10, **characterized in that** it comprises means for computing a radius of protection based on outputs of the various Kalman filters and means for verifying that this radius of protection does not exceed a determined threshold.

12. Receiver according to one of Claims 8 or 9, **characterized in that** it comprises means for computing a radius of protection based on the outputs of a single Kalman filter supplied by M observations composed of the differences between a vector of main observations of which the m components are equal to the arithmetic mean of the M observations by the M reference receivers and the M vectors of mean observations of which the m components are equal to the arithmetic mean of M-1 observations by the reference receivers, and means for verifying that this radius of protection does not exceed a determined threshold.

FIG. 1

Mesures de pseudo-distances
PD_C$_i$
PD_PH$_i$

Position des satellites (Ephéméride$_i$)

$P_{n+1/n+1}$

Cor$_{n+1/n+1}$

$G_{n+1/n+1}$ corrigée Position estimée du récepteur

$X_{n+1/n+1}$ corrigé

$P_{n+1/n+1}$

$X_{n+1/n+1}$

**Correction de position**

**mémoire**

**mémoire**

$X_{n/n}$ corrigé

$P_{n/n}$

**Recalage**
$K_{n+1} = P_{n+1/n} \cdot H_{n+1}^T \cdot (H_{n+1} \cdot P_{n+1/n} \cdot H_{n+1}^T + R_{n+1})^{-1}$
$P_{n+1/n+1} = (I - K_{n+1} \cdot H_{n+1}) P_{n+1/n}$
$X_{n+1/n+1} = X_{n+1/n} + K_{n+1} \cdot (Z_{n+1} - H_{n+1} \cdot X_{n+1/n})$

Observations
$Z_{n+1}$

PDe$_{i,n+1}$

**Calcul des pseudo-distance estimée a priori**

**Propagation**
$X_{n+1/n} = F_n \cdot X_{n/n}$
$P_{n+1/n} = F_n \cdot P_{n/n} \cdot F_n^T + Q_n$

Position du récepteur

$G_{n+1/n}$

$G_{n+1/n+1}$ corrigée

**mémoire**

$G_{n/n}$ corrigée

**Propagation**
$G_{n+1/n} = f(G_{n/n})$

**FIG.2**

FIG. 3

$$X=\begin{matrix}
dL_1 \\
dG \\
dh \\
dt \\
Bphase1_1 \\
Bphase2_1 \\
Riono1_1 \\
Rtropo_1 \\
\vdots \\
Bphase1_i \\
Bphase2_i \\
Riono1_i \\
Rtropo_i \\
\vdots \\
Bphase1_m \\
Bphase2_m \\
Riono1_m \\
Rtropo_m
\end{matrix}$$

Erreur sur la position en longitude du récepteur
Erreur sur la position en latitude du récepteur
Erreur sur la position en altitude du récepteur
Erreur sur la date de mesure
Ambiguités mesures de pseudo-distances de porteuse sur $L_1$
Ambiguités mesures de pseudo-distances de porteuse sur $L_2$
Erreur causée par l'ionosphère sur la mesure de pseudo-distances de code sur $L_1$
Erreur causée par la troposphère

Ambiguités mesures de pseudo-distances de porteuse sur $L_1$
Ambiguités mesures de pseudo-distances de porteuse sur $L_2$
Erreur causée par l'ionosphère sur la mesure de pseudo-distances de code sur $L_1$
Erreur causée par la troposphère.

États propres au satellite 1

États propres au satellite i

EP 1 839 070 B2

FIG. 4

FIG. 5

EP 1 839 070 B2

PD_C$_{ppal}$

PD_PH$_{ppal}$

Data$_{ppal}$

Filtre principal → G$_{ppal}$ → G$_{ppal}$

PD_C$_i$

PD_PH$_i$

Data$_i$

Filtre auxiliaire i → G$_i$, $\sigma_1$

PD_C$_m$

PD_PH$_m$

Data$_m$

Filtre auxiliaire m → G$_m$, $\sigma_m$

Calcul rayon de protection → RP

20

$$PD\_C_{ppal} = (PD\_C_1, ..., PD\_C_m)$$

$$PD\_PH_{ppal} = (PD\_PH_1, ..., PD\_PH_m)$$

$$PD\_C_i = (PD\_C_1, ..., PD\_C_{i-1}, PD\_C_{i+1}, ..., PD\_C_m)$$

$$PD\_PH_i = (PD\_PH_1, ..., PD\_PH_{i-1}, PD\_PH_{i+1}, ..., PD\_PH_m)$$

$$Data_{ppal} = \left\{ \begin{array}{l} (Eph\acute{e}m\acute{e}ride_1, ..., Eph\acute{e}m\acute{e}ride_m) \\ (S/N)_1, ..., (S/N)_m \end{array} \right.$$

$$Data_i = \left\{ \begin{array}{l} (Eph\acute{e}m\acute{e}ride_1, ..., Eph\acute{e}m\acute{e}ride_{i-1}, Eph\acute{e}m\acute{e}ride_{i+1}, ..., Eph\acute{e}m\acute{e}ride_m) \\ (S/N)_1, ..., (S/N)_{i-1}, (S/N)_{i+1}, ..., (S/N)_m \end{array} \right.$$

FIG.6

FIG. 7

**EP 1 839 070 B2**

## RÉFÉRENCES CITÉES DANS LA DESCRIPTION

**Documents brevets cités dans la description**

- FR 2769442 A